(19) **Europäisches Patentamt**
**European Patent Office**
**Office européen des brevets**

(11) **EP 3 605 701 B1**

(12) **EUROPEAN PATENT SPECIFICATION**

(45) Date of publication and mention
of the grant of the patent:
**14.09.2022 Bulletin 2022/37**

(21) Application number: **18770708.8**

(22) Date of filing: **23.03.2018**

(51) International Patent Classification (IPC):
$H01M\ 4/131^{(2010.01)}$ $\quad H01M\ 4/36^{(2006.01)}$
$H01M\ 4/485^{(2010.01)}$ $\quad H01M\ 4/505^{(2010.01)}$
$H01M\ 4/525^{(2010.01)}$ $\quad H01M\ 10/0525^{(2010.01)}$
$H01M\ 10/0569^{(2010.01)}$ $\quad H01M\ 10/42^{(2006.01)}$

(52) Cooperative Patent Classification (CPC):
**H01M 4/131; H01M 4/364; H01M 4/485;**
**H01M 4/505; H01M 4/525; H01M 10/0525;**
**H01M 10/0569;** H01M 2010/4292;
H01M 2300/0037; Y02E 60/10

(86) International application number:
**PCT/JP2018/011861**

(87) International publication number:
**WO 2018/174269 (27.09.2018 Gazette 2018/39)**

(54) **NONAQUEOUS ELECTROLYTE BATTERY, BATTERY PACK AND BATTERY SYSTEM**

BATTERIE MIT WASSERFREIEM ELEKTROLYT, BATTERIEPACK UND BATTERIESYSTEM

BATTERIE À ÉLECTROLYTE NON AQUEUX, BLOC-BATTERIE ET SYSTÈME DE BATTERIE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **23.03.2017 JP 2017057478**

(43) Date of publication of application:
**05.02.2020 Bulletin 2020/06**

(73) Proprietor: **KABUSHIKI KAISHA TOSHIBA**
**Minato-ku**
**Tokyo**
**105-8001 (JP)**

(72) Inventors:
• **YAMAMOTO, Dai**
**Tokyo 105-8001 (JP)**
• **WATANABE, Yuki**
**Tokyo 105-8001 (JP)**
• **NEGISHI, Nobuyasu**
**Tokyo 105-8001 (JP)**
• **HARA, Ryo**
**Tokyo 105-8001 (JP)**

(74) Representative: **Hoffmann Eitle**
**Patent- und Rechtsanwälte PartmbB**
**Arabellastraße 30**
**81925 München (DE)**

(56) References cited:
**EP-A2- 1 530 248**     **WO-A1-2016/175148**
**JP-A- 2002 151 154**    **JP-A- 2003 297 422**
**JP-A- 2009 301 954**    **US-A1- 2016 204 432**

• **M. Z. KUFIAN ET AL: "Performance of lithium-ion cells using 1 M LiPF6 in EC/DEC (v/v?=?1/2) electrolyte with ethyl propionate additive", IONICS, vol. 16, no. 5, 22 December 2009 (2009-12-22), pages 409-416, XP055747948, DE ISSN: 0947-7047, DOI: 10.1007/s11581-009-0413-6**
• **PETIBON R ET AL: "The use of ethyl acetate and methyl propanoate in combination with vinylene carbonate as ethylene carbonate-free solvent blends for electrolytes in Li-ion batteries", ELECTROCHIMICA ACTA, ELSEVIER, AMSTERDAM, NL, vol. 154, 16 December 2014 (2014-12-16), pages 227-234, XP029138075, ISSN: 0013-4686, DOI: 10.1016/J.ELECTACTA.2014.12.084**

**Description**

FIELD

Embodiments of the present invention relate to a nonaqueous electrolyte battery, a battery pack, and a battery system.

BACKGROUND

By taking advantage of the high energy density and the high output, a lithium ion secondary battery that is charged and discharged with the movement of lithium ions between a negative electrode and a positive electrode has been widely applied to the applications from a small-size application of a mobile electronic device or the like to a large-size application of an electric vehicle, a power supply and demand adjusting system, or the like.

A nonaqueous electrolyte battery, which uses, as a negative electrode active material, a lithium titanium composite oxide having a high lithium adsorption-and-release potential of around 1.55 V based on a lithium electrode in place of a carbon material, has also been put into practical use. The lithium titanium composite oxide is excellent in the cycle performance because the volume change due to the charging and discharging is small. Further, on a negative electrode containing a lithium titanium composite oxide, a lithium metal is not deposited at the time of adsorption and release of lithium, and as a result, a secondary battery including the negative electrode can be charged with a large current.

As the attempt to reduce the open circuit voltage (OCV) of a nonaqueous electrolyte battery, an attempt has been made to adjust the capacity ratio of each of the positive electrode and the negative electrode of the nonaqueous electrolyte battery. For example, the use potential range of the positive electrode can be limited by making the positive electrode capacity excessive with respect to the negative electrode capacity. According to such a design, the OCV of a nonaqueous electrolyte battery can be lowered as a result.

In particular, in a nonaqueous electrolyte secondary battery using a lithium titanium composite oxide as the negative electrode active material, the voltage-compatibility with a lead-acid storage battery can be improved by lowering the OCV of the battery.

CITATION LIST

PATENT LITERATURE

Patent Literature 1: Japanese Patent No. 3754218
Patent Literature 2: Jpn. Pat. Appln. KOKAI Publication No. 2016-35901
Patent Literature 3: Japanese Patent No. 5433953
Patent Literature 4: Jpn. Pat. Appln. KOKAI Publication No. 2007-305447
Patent Literature 5: Jpn. Pat. Appln. KOKAI Publication No. 2005-142047
Patent Literature 6: Jpn. Pat. Appln. KOKAI Publication No. 2004-87229

SUMMARY

TECHNICAL PROBLEM

An object is to provide a nonaqueous electrolyte battery capable of exhibiting excellent life performance.

SOLUTION TO PROBLEM

According to an embodiment, a nonaqueous electrolyte battery is provided. The nonaqueous electrolyte battery includes a positive electrode, a negative electrode and a nonaqueous electrolyte. The positive electrode contains a lithium cobalt composite oxide. The negative electrode contains a lithium titanium composite oxide. The positive electrode and the negative electrode satisfy a formula (1): $1.25 \leq p/n \leq 1.6$. Here, p is a capacity [mAh/cm$^2$] of the positive electrode, and n is a capacity [mAh/cm$^2$] of the negative electrode. The nonaqueous electrolyte contains at least one propionate ester. A content w of the at least one propionate ester in the nonaqueous electrolyte is 20% by weight or more and less than 64% by weight with respect to the nonaqueous electrolyte. The nonaqueous electrolyte battery according to the embodiment satisfies a formula (2): $13 < w/(p/n) \leq 40$.

According to an embodiment, a battery pack is provided. The battery pack includes the nonaqueous electrolyte battery according to the embodiment.

According to an embodiment, a battery system is provided. The battery system includes a first battery unit and a second battery unit electrically connected in parallel to the first battery unit. The first battery unit includes the nonaqueous electrolyte battery according to the embodiment. The second battery unit includes a lead-acid storage battery.

BRIEF DESCRIPTION OF THE DRAWINGS

FIG. 1 is a schematic cut-away perspective view of an example of a nonaqueous electrolyte battery according to an embodiment.
FIG. 2 is a schematic cross-sectional view of an A portion shown in FIG. 1.
FIG. 3 is a schematic plan view of a positive electrode that is included in the nonaqueous electrolyte battery shown in FIG. 1.
FIG. 4 is a schematic cross-sectional view of another example of an electrode group that can be included in the nonaqueous electrolyte battery according to an embodiment.
FIG. 5 is an exploded perspective view of an example of a battery pack according to an embodiment.
FIG. 6 is a block diagram showing an electric circuit of the battery pack shown in FIG. 5.
FIG. 7 is an electric circuit diagram of an example of a battery system according to an embodiment.

DETAILED DESCRIPTION

The embodiments will be explained below with reference to the drawings. In this case, the structures common to all embodiments are represented by the same symbols and duplicated explanations will be omitted. Also, each drawing is a typical view for explaining the embodiments and for promoting an understanding of the embodiments. Though there are parts different from an actual device in shape, dimension and ratio, these structural designs may be properly changed taking the following explanations and known technologies into consideration.

(First Embodiment)

According to an embodiment, a nonaqueous electrolyte battery is provided. The nonaqueous electrolyte battery includes a positive electrode, a negative electrode and a nonaqueous electrolyte. The positive electrode contains a lithium cobalt composite oxide. The negative electrode contains a lithium titanium composite oxide. The positive electrode and the negative electrode satisfy a formula (1): $1.25 \leq p/n \leq 1.6$. Here, p is a capacity [$mAh/cm^2$] of the positive electrode, and n is a capacity [$mAh/cm^2$] of the negative electrode. The nonaqueous electrolyte contains at least one propionate ester. A content w of the at least one propionate ester in the nonaqueous electrolyte is 20% by weight or more and less than 64% by weight with respect to the nonaqueous electrolyte. The nonaqueous electrolyte battery according to the embodiment satisfies a formula (2): $13 < w/(p/n) \leq 40$.

During a series of research, the inventors have found that a nonaqueous electrolyte battery in which the positive electrode capacity is made excessive and the OCV is lowered has a problem of causing the increase in the gas generation amount during the charging and discharging if no measure is taken at all.

As a result of earnest research based on that, the inventors have found that the cause of the gas generation in the nonaqueous electrolyte battery in which the positive electrode capacity is made excessive and the OCV is lowered is the oxidative decomposition of a nonaqueous electrolyte.

As a means for suppressing such a gas generation, for example, including a lithium cobalt composite oxide in the positive electrode can be mentioned. In a nonaqueous electrolyte battery, a lithium cobalt composite oxide exhibits a buffering effect on the oxidative decomposition of a nonaqueous electrolyte, and can suppress the gas. As a result of studies, the inventors have found that this effect is mainly exhibited in a state in which the potential of the positive electrode is 4.1 V (vs. $Li/Li^+$) or more. However, it has been found that in the battery in which the positive electrode capacity is made excessive with respect to the negative electrode capacity, the potential of the positive electrode cannot be made to be 4.1 V (vs. $Li/Li^+$) or more even in a state close to the full state-of-charge, and an effect of suppressing the gas generation is not exhibited by a lithium cobalt composite oxide.

As another method of suppressing the oxidative decomposition of a nonaqueous electrolyte, for example, forming a passive film on a surface of a positive electrode current collector can be mentioned. However, in this method, although the decomposition of a nonaqueous electrolyte on the surface of the current collector can be suppressed, the decomposition of a nonaqueous electrolyte on a surface of an active material cannot be suppressed.

As a result of continuing research in view of such a situation, the inventors have realized a nonaqueous electrolyte battery according to the embodiment. The nonaqueous electrolyte battery according to the embodiment can suppress the gas generation during charging and discharging, and as a result, can exhibit excellent life performance.

The mechanism by which the nonaqueous electrolyte battery according to the embodiment can suppress the gas generation is not known in detail, but it can be presumed to be as follows. However, the reason why the nonaqueous electrolyte battery according to the embodiment can suppress the gas generation is not limited to the following theory.

First, the lithium cobalt composite oxide contained in a positive electrode can act on a decomposition product of a component of a nonaqueous electrolyte. At least one propionate ester contained in the nonaqueous electrolyte can produce a compound containing propionic acid, for example, by hydrolysis. The lithium cobalt composite oxide contained in the positive electrode can suppress the gas generation by interacting with the compound containing propionic acid.

Examples of the decomposition product of propionate ester capable of interacting with the lithium cobalt composite oxide include not only a hydrolysis product but also a decomposition product generated by oxidative decomposition, reductive decomposition, thermal decomposition or the like.

As a result of keen study, the inventors have found that the above effect of suppressing gas generation by the interaction between the lithium cobalt composite oxide and the decomposition product of propionate ester is influenced mainly by a ratio of the capacities per unit area of a positive electrode and a negative electrode, and the concentration of propionate ester in a nonaqueous electrolyte. This finding is specifically as follows. First, in a nonaqueous electrolyte battery in which the capacity ratio p/n is 1.25 or more, the positive electrode capacity is excessive with respect to the negative electrode capacity. In such a battery, the charge reaction and discharge reaction of the battery are repeated in a state in which the positive electrode containing a lithium cobalt composite oxide has a large amount of Li inserted thereinto. The Li having been inserted into the positive electrode may become a factor in a side reaction, and thus gas generation may be caused. Further, it is presumed that the interaction between the decomposition product of propionate ester and the lithium cobalt composite oxide is influenced mainly by the amount of the Li having been inserted into the positive electrode. From these presumptions, the inventors have derived that the ratio of the concentration of propionate ester in a nonaqueous electrolyte to the capacity ratio p/n has an appropriate range for suppressing the gas generation.

Specifically, the nonaqueous electrolyte battery according to the embodiment satisfies the following formulae (1) and (2):

$$\texttt{formula (1): } 1.25 \leq p/n \leq 1.6;$$

and

formula (2) : $13 < w/(p/n) \leq 40$. Here, the p is a capacity [mAh/cm$^2$] per unit area of a positive electrode, and the n is a capacity [mAh/cm$^2$] per unit area of a negative electrode. Further, the w is a content [% by weight] of at least one propionate ester in a nonaqueous electrolyte. The content w is within a range of from 20% by weight to less than 64% by weight with respect to the weight of the nonaqueous electrolyte.

The nonaqueous electrolyte battery according to the embodiment can sufficiently exhibit the above-mentioned effect of suppressing the gas generation by the interaction between the lithium cobalt composite oxide and the decomposition product of propionate ester, and as a result, can exhibit excellent life performance.

In contrast, the nonaqueous electrolyte battery that does not satisfy the formula (1) and/or the formula (2) cannot sufficiently exhibit the effect of suppressing the gas generation for the following reason.

First, examples of the nonaqueous electrolyte battery in which the value of the ratio w/ (p/n) is 13 or less can be the following nonaqueous electrolyte batteries. One example is a nonaqueous electrolyte battery in which no propionate ester is contained in the nonaqueous electrolyte, that is, w = 0. Another example is a nonaqueous electrolyte battery in which the concentration of propionate ester in the nonaqueous electrolyte is extremely low with respect to the capacity ratio p/n. In these nonaqueous electrolyte batteries, during charging and discharging, the amount of the decomposition product of propionate ester that interacts with the lithium cobalt composite oxide becomes extremely small with respect to the amount of the Li having been inserted into the positive electrode. These nonaqueous electrolyte batteries cannot exhibit a sufficient effect of suppressing the gas generation.

As a further example of the nonaqueous electrolyte battery in which the value of the ratio w/(p/n) is 13 or less, a nonaqueous electrolyte battery in which the capacity p per unit area of the positive electrode is excessive, and as a result, the capacity ratio p/n is extremely large can be mentioned. In such a nonaqueous electrolyte battery, the charging and discharging are repeated in a state in which the positive electrode has an excessively large amount of Li inserted thereinto. Therefore, in such a nonaqueous electrolyte battery, during charging and discharging, the amount of the decomposition product of propionate ester that interacts with the lithium cobalt composite oxide becomes extremely small with respect to the amount of the Li having been inserted into the positive electrode.

In contrast, examples of the nonaqueous electrolyte battery in which the value of the ratio w/(p/n) is larger than 40 can be the following nonaqueous electrolyte batteries. One example is a nonaqueous electrolyte battery in which the concentration of propionate ester in the nonaqueous electrolyte is extremely high. In such a nonaqueous electrolyte battery, during charging and discharging, the amount of the Li having been inserted into the positive electrode becomes extremely small with respect to the amount of the decomposition product derived from propionate ester. In such a nonaqueous electrolyte battery, an effect of suppressing the gas generation is not sufficiently obtained. Further, in such a nonaqueous electrolyte battery, dissociation of Li ions from an electrolyte in the nonaqueous electrolyte is not promoted, and as a result, the resistance is increased.

As another example of the nonaqueous electrolyte battery in which the value of the ratio w/(p/n) is larger than 40, a nonaqueous electrolyte battery in which the capacity ratio p/n is extremely small can be mentioned. In such a nonaqueous electrolyte battery, the potential of the positive electrode becomes excessively high in a state-of-charge close to the full state-of-charge. As a result, the oxidative decomposition of propionate ester is excessively caused, and the amount of the gas generation is increased.

In a nonaqueous electrolyte battery in which the value of the capacity ratio p/n is from 1.25 to 1.6, the use range of the positive electrode is limited, and the OCV of the nonaqueous electrolyte battery can be lowered. In such a battery, the potential of the positive electrode is kept low even in a state close to the full state-of-charge, and the deterioration of the active material can be suppressed. In contrast, in a nonaqueous electrolyte battery in which the capacity ratio p/n is smaller than 1.25, the potential of the positive electrode becomes excessively high in a state close to the full state-of-charge. When a lithium cobalt composite oxide is contained in the positive electrode, although the effect of suppressing the gas generation can be obtained, capacity deterioration is promoted, and as a result, the life performance is lowered. Further, in a nonaqueous electrolyte battery in which the value of the capacity ratio p/n is larger than 1.6, the capacity p per unit area of the positive electrode is excessive with respect to the capacity n per unit area of the negative electrode. In such a nonaqueous electrolyte battery, the energy density is excessively low. In addition, in such a nonaqueous electrolyte battery, the charge reaction and discharge reaction proceed in a state in which the Li has been excessively inserted into the positive electrode, and as a result, the resistance is increased. In a nonaqueous electrolyte battery in which the resistance is high, the load due to the repetition of charging and discharging is largely applied, and the deterioration easily proceeds. As a result, such a nonaqueous electrolyte battery is inferior not only in the input-and-output performance but also in the life performance.

Further, for example, in a nonaqueous electrolyte battery in which a carbon-based active material is used for the negative electrode, there is a problem that the deterioration of the negative electrode accelerates at the end of charging and discharging. As the capacity of the negative electrode becomes smaller than the capacity of the positive electrode, the problem of the deterioration becomes more remarkable. Therefore, in a battery in which a carbon-based active material is used for the negative electrode, when the capacity ratio p/n is set to 1.25 or more, the deterioration of the negative electrode proceeds, and excellent life performance cannot be exhibited. In contrast, the lithium titanium composite oxide that is included in the negative electrode of the nonaqueous electrolyte battery according to the embodiment can function as a negative electrode active material. In a nonaqueous electrolyte battery in which an active material of a lithium titanium composite oxide is used for the negative electrode, the deterioration of the negative electrode at the end of charging and discharging is extremely small. Therefore, the nonaqueous electrolyte battery according to the embodiment in which a lithium titanium composite oxide is used for the negative electrode has a capacity ratio p/n of 1.25 or more, however, can exhibit excellent life performance.

The value of the capacity ratio p/n preferably falls within a range of from 1.3 or more to less than 1.5. In the nonaqueous electrolyte battery in which the capacity ratio p/n is within the preferred range, the energy density of the nonaqueous electrolyte battery can be increased while the gas generation can be suppressed. From the viewpoint of the energy density, the value of the capacity ratio p/n is more preferably within a range of from 1.3 or more to less than 1.45.

The capacity ratio p/n of a nonaqueous electrolyte battery can be controlled by, for example, the coating amounts of a slurry for producing a positive electrode and a slurry for producing a negative electrode, the kind and blending ratio of each active material in each slurry, and the mixing ratio of auxiliary components such as a conductive agent and a binder in each slurry. For example, according to the procedure described in Examples, it is possible to produce a nonaqueous electrolyte battery in which the value of the capacity ratio p/n is from 1.25 to 1.6.

The content w of the propionate ester in a nonaqueous electrolyte falls within a range of from 20% by weight to 64% by weight with respect to the weight of the nonaqueous electrolyte, and satisfies a formula (2): $13 < w/(p/n) \leq 40$. In a nonaqueous electrolyte battery in which the content w satisfies the formula (2) but is less than 20% by weight, the amount of the propionic acid generated during charging and discharging of the nonaqueous electrolyte battery is not sufficient, and the gas generation cannot be sufficiently suppressed. Further, in a nonaqueous electrolyte battery in which the content w satisfies the formula (2) but is larger than 64% by weight, the resistance of the nonaqueous electrolyte is increased and the rate characteristics are lowered. In addition, in such a battery, the deterioration of battery due to the decomposition of propionate ester becomes remarkable, and the cycle life characteristics are lowered.

The content w of the propionate ester in a nonaqueous electrolyte is preferably 20% by weight or more and less than 50% by weight, and more preferably 20% by weight or more and less than 40% by weight, with respect to the weight of the nonaqueous electrolyte.

Further, the value of the ratio w/(p/n) preferably falls within a range of $13.0 < w/(p/n) \leq 40$, more preferably falls within a range of $14 < w/(p/n) \leq 35$, and furthermore preferably falls within a range of $15 < w/(p/n) \leq 30$. The nonaqueous

electrolyte battery in which the value of the ratio w/(p/n) falls within the preferred range can further suppress the gas generation during charging and discharging.

Next, the nonaqueous electrolyte battery according to the embodiment will be described in more detail.

The nonaqueous electrolyte battery according to the embodiment includes a positive electrode, a negative electrode, and a nonaqueous electrolyte.

The positive electrode can include a positive electrode current collector. The positive electrode current collector can have, for example, a belt-like planar shape. A belt-like positive electrode current collector can have two surfaces including a first surface and a second surface as the reverse surface to the first surface.

The positive electrode can further include a positive electrode active material-containing layer. The positive electrode active material-containing layer can be provided, for example, on each of two surfaces or one surface of the positive electrode current collector. The positive electrode current collector can include a portion on a surface of which the positive electrode active material-containing layer is not provided. This portion can serve as a positive electrode lead.

The positive electrode contains a lithium cobalt composite oxide. The lithium cobalt composite oxide can have a composition represented, for example, by a general formula of $Li_{x1}CoO_2$. In the general formula, the subscript x1 can take a value within a range of $0 < x1 \leq 1$ depending on the state-of-charge of the lithium cobalt composite oxide. The lithium cobalt composite oxide can also be referred to as lithium cobaltate. That is, the lithium cobalt composite oxide contained in the positive electrode can contain, for example, lithium cobaltate having a composition represented by a general formula of $Li_{x1}CoO_2$, and in the general formula, $0 < x1 \leq 1$. The lithium cobalt composite oxide can serve as a positive electrode active material. The lithium cobalt composite oxide can be contained in a positive electrode active material-containing layer.

The positive electrode active material-containing layer can further contain a conductive agent, and a binder. The positive electrode active material-containing layer can further contain a positive electrode active material other than the lithium cobalt composite oxide.

The negative electrode can include a negative electrode current collector. The negative electrode current collector can have, for example, a belt-like planar shape. A belt-like negative electrode current collector can have two surfaces including a first surface and a second surface as the reverse surface to the first surface.

The negative electrode can further include a negative electrode active material-containing layer. The negative electrode active material-containing layer can be provided, for example, on each of two surfaces or one surface of the negative electrode current collector. The negative electrode current collector can include a portion on a surface of which the negative electrode active material-containing layer is not provided. This portion can serve as a positive electrode lead.

The negative electrode contains a lithium titanium composite oxide. The lithium titanium composite oxide can serve as a negative electrode active material. The lithium titanium composite oxide can be contained in a negative electrode active material-containing layer. The negative electrode active material-containing layer can contain a conductive agent, and a binder. The negative electrode active material-containing layer can further contain a negative electrode active material other than the lithium titanium composite oxide.

The positive electrode and the negative electrode can constitute an electrode group by opposing a positive electrode active material-containing layer to a negative electrode active material-containing layer with a separator being sandwiched therebetween.

The structure of the electrode group thus formed is not particularly limited. For example, the electrode group can have a stack structure. The stack structure has a structure in which the positive electrode and negative electrode described previously are stacked with a separator sandwiched between the positive electrode and the negative electrode. Alternatively, the electrode group can have a wound structure. The wound structure is a structure in which the positive electrode and negative electrode described previously are stacked with a separator sandwiched between the positive electrode and the negative electrode, and the thus obtained stack is spirally wound.

For example, an electrode group can be impregnated with a nonaqueous electrolyte.

The nonaqueous electrolyte can contain, for example, a nonaqueous solvent, and an electrolyte. The electrolyte can be dissolved in the nonaqueous solvent.

The nonaqueous electrolyte battery according to the embodiment can further include a container for housing the electrode group and the nonaqueous electrolyte.

Further, the nonaqueous electrolyte battery according to the embodiment can further include a positive electrode current-collecting tab electrically connected to a positive electrode lead, and a negative electrode current-collecting tab electrically connected to a negative electrode lead. The positive electrode current-collecting tab and the negative electrode current-collecting tab are drawn to the outside from the container, and can serve as a positive electrode terminal and a negative electrode terminal, respectively. Alternatively, the positive electrode current-collecting tab and the negative electrode current-collecting tab can also be connected to a positive electrode terminal and a negative electrode terminal, respectively.

Next, the materials for respective components that can be included in the nonaqueous electrolyte battery according to the embodiment will be described in detail.

(1) Positive electrode

As the positive electrode current collector, for example, a metal foil of aluminum, copper, or the like can be used.

The positive electrode active material other than the lithium cobalt composite oxide is not particularly limited as long as it can insert and extract lithium or lithium ions. Examples of the positive electrode active material other than the lithium cobalt composite oxide include manganese dioxide ($MnO_2$), iron oxide, copper oxide, nickel oxide, a lithium nickel composite oxide (for example, $Li_{x2}NiO_2$, $0 < x2 \leq 1$), a lithium nickel cobalt manganese composite oxide (capable of having a composition represented, for example, by a general formula of $Li_xNi_{1-a-b-c}CO_aMn_bM1_cO_2$, in the formula, M1 is at least one selected from the group consisting of Mg, Al, Si, Ti, Zn, Zr, Ca, W, Nb and Sn, and respective subscripts fall within ranges of $-0.2 \leq x \leq 0.5$, $0 < a < 0.4$ (preferably, $0.25 < a < 0.4$), $0 < b < 0.5$, and $0 \leq c < 0.1$), a lithium nickel cobalt composite oxide (for example, $Li_{x3}Ni_{1-e}Co_eO_2$, $0 < x3 \leq 1$, and $0 < e < 1$), a lithium manganese cobalt composite oxide (for example, $Li_{x4}Mn_fCo_{1-f}O_2$, $0 < x4 \leq 1$, and $0 < f < 1$), a lithium nickel cobalt aluminum composite oxide (for example, $Li_{x5}Ni_{1-g-h}CO_gAl_hO_2$, $0 < x5 \leq 1$, $0 < g < 1$, and $0 < h < 1$), a lithium manganese composite oxide (for example, $Li_{x6}Mn_2O_4$, and $Li_{x6}MnO_2$, $0 < x6 \leq 1$), a lithium phosphate compound oxide having an olivine structure (for example, $Li_{x7}FePO_4$, $Li_{x7}MnPO_4$, $Li_{x7}Mn_{1-i}Fe_iPO_4$, and $Li_{x7}CoPO_4$, $0 < x7 \leq 1$, and $0 < i < 1$), iron sulfate ($Fe_2(SO_4)_3$), and a vanadium oxide (for example, $V_2O_5$).

The kind of the positive electrode active material other than the lithium cobalt composite oxide may be one kind, or two or more kinds. The weight of the lithium cobalt composite oxide in the positive electrode active material is preferably from 5% by weight to 100% by weight, and more preferably from 10% by weight to 100% by weight, with respect to the weight of the positive electrode active material. That is, the positive electrode can contain a positive electrode active material. The positive electrode active material can contain, for example, the lithium cobalt composite oxide described above. The weight of the lithium cobalt composite oxide is preferably from 5% by weight to 100% by weight, and more preferably from 10% by weight to 100% by weight, with respect to the weight of the positive electrode active material.

The positive electrode preferably further contains the lithium nickel cobalt manganese composite oxide described above. When the numerical values of the subscripts in the general formula described above fall within the ranges described above, respectively, the cobalt component in the lithium nickel cobalt manganese composite oxide effectively acts, and the gas generation can be further suppressed.

In a preferred aspect, the positive electrode contains the lithium cobalt composite oxide and the lithium nickel cobalt manganese composite oxide represented by the general formula of $Li_{1-x}Ni_{1-a-b-c}Co_aMn_bM1_cO_2$ in a weight ratio of 100 : 0 to 4 : 96, and in the above general formula for the lithium nickel cobalt manganese composite oxide, respective subscripts fall within ranges of $-0.2 \leq x \leq 0.5$, $0 < a \leq 0.4$, $0 < b \leq 0.5$, and $0 \leq c \leq 0.1$. The positive electrode contains a lithium cobalt composite oxide and a lithium nickel cobalt manganese composite oxide represented by the above general formula more preferably in a weight ratio of 100 : 0 to 10 : 90, and furthermore preferably in a weight ratio of 100 : 0 to 20 : 80.

The conductive agent contained in the positive electrode active material-containing layer preferably contains a carbon material. Examples of the carbon material include acetylene black, Ketjen black, furnace black, graphite, and carbon nanotubes. The positive electrode active material-containing layer can contain one of these carbon materials, or two or more of these carbon materials, or can further contain another conductive agent.

Further, the binder that can be contained in the positive electrode active material-containing layer is not particularly limited. For example, as the binder, a polymer that disperses favorably in a mixing solvent for preparing a slurry can be used. Examples of the polymer include polyvinylidene fluoride, hexafluoropropylene, and polytetrafluoroethylene.

The contents of a positive electrode active material, a conductive agent, and a binder in a positive electrode active material-containing layer are preferably from 80% by weight to 98% by weight, from 1% by weight to 10% by weight, and from 1% by weight to 10% by weight, respectively, and more preferably from 90% by weight to 94% by weight, from 2% by weight to 8% by weight, and from 1% by weight to 5% by weight, respectively, based on the weight of the positive electrode active material-containing layer.

The positive electrode can be produced, for example, by the following method. First, a lithium cobalt composite oxide, another arbitrary active material, an arbitrary conductive agent, and an arbitrary binder are put into an appropriate solvent to obtain a mixture. Subsequently, the obtained mixture is put into a stirrer. In this stirrer, the mixture is stirred to obtain a slurry. The slurry thus obtained is applied onto the above positive electrode current collector, and the coated slurry is dried, subsequently the coated slurry is pressed, and as a result, a positive electrode can be produced.

(2) Negative electrode

As the negative electrode current collector, for example, a metal foil of aluminum, copper, or the like can be used.

As the lithium titanium composite oxide contained in a negative electrode, for example, lithium titanate having a spinel-type crystal structure (the lithium titanate can have, for example, a composition of $Li_{4+y}Ti_5O_{12}$ (y varies within

a range of $0 \le y \le 3$ depending on the state-of-charge)) can be mentioned. As another lithium titanium composite oxide, for example, lithium titanate having a ramsdelite-type crystal structure can be mentioned. That is, the lithium titanium composite oxide can contain, for example, lithium titanate having a spinel-type crystal structure and a general formula of $Li_{4+y}Ti_5O_{12}$, and in the above general formula, $0 \le y \le 3$.

Examples of the active material other than the lithium titanium composite oxide include anatase-type, rutile-type, or bronze-type titanium-containing oxide, a niobium titanium-containing oxide having a monoclinic crystal structure, and a Na-containing niobium titanium composite oxide having an orthorhombic crystal structure.

It is preferred that 50% by weight or more of the negative electrode active material is lithium titanate having a spinel-type crystal structure. The negative electrode active material particularly preferably consists of lithium titanate having a spinel-type crystal structure..

As the conductive agent and the binder, which can be contained in a negative electrode active material-containing layer, a conductive agent and a binder, which are similar to those capable of being contained in a positive electrode active material-containing layer, can be used.

The contents of the negative electrode active material, the conductive agent, and the binder in the negative electrode active material-containing layer are preferably from 80% by weight to 98% by weight, from 1% by weight to 10% by weight, and from 1% by weight to 10% by weight, respectively, and more preferably from 90% by weight to 94% by weight, from 2% by weight to 8% by weight, and from 1% by weight to 5% by weight, respectively, based on the weight of the negative electrode active material-containing layer.

The negative electrode can be produced, for example, by the following procedure. First, a negative electrode active material, a conductive agent, and a binder are mixed. The mixture thus obtained is put into a solvent to prepare a slurry. This slurry is applied onto a negative electrode current collector, and the coated slurry is dried, subsequently, the coated slurry is pressed. Thus, a negative electrode can be produced.

(3) Nonaqueous electrolyte

The at least one propionate ester can be contained in a nonaqueous electrolyte, for example, as a nonaqueous solvent.

The at least one propionate ester can contain, for example, at least one selected from the group consisting of methyl propionate, ethyl propionate, propyl propionate, and butyl propionate. The at least one propionate ester preferably contains at least one selected from the group consisting of methyl propionate and ethyl propionate.

The nonaqueous electrolyte can further contain propylene carbonate (PC) as a nonaqueous solvent. A compound containing propylene glycol can be generated from a propylene carbonate solvent. This compound can play a similar role to that of the compound containing propionic acid, in a nonaqueous electrolyte battery, and can further suppress the gas generation by the interaction with the lithium cobalt composite oxide. The content of propylene carbonate in a nonaqueous electrolyte is preferably 20% by weight or more and less than 60% by weight, and more preferably 25% by weight or more and less than 55% by weight, with respect to the weight of the nonaqueous electrolyte. In a more preferred another aspect, the content of propylene carbonate in a nonaqueous electrolyte is 20% by weight or more and less than 40% by weight, with respect to the weight of the nonaqueous electrolyte. Particularly preferably, the content of propylene carbonate in a nonaqueous electrolyte is 25% by weight or more and less than 40% by weight with respect to the weight of the nonaqueous electrolyte. In the nonaqueous electrolyte battery in which the content of propylene carbonate falls within the particularly preferred range, the nonaqueous electrolyte can exhibit more excellent ion conductivity, and as a result, lower internal resistance of the battery can be realized.

Other examples of the nonaqueous solvent include ethylene carbonate (EC), butylene carbonate (BC), dimethyl carbonate (DMC), diethyl carbonate (DEC), ethyl methyl carbonate (EMC), $\gamma$-butyrolactone ($\gamma$-BL), sulfolane, acetonitrile, 1,2-dimethoxyethane, 1,3-dimethoxy propane, dimethyl ether, tetrahydrofuran (THF), and 2-methyltetrahydrofuran.

As the nonaqueous solvent, one solvent may be used alone, or a mixed solvent in which two or more solvents are mixed may be used. In a preferred aspect, the nonaqueous solvent consists of the at least one propionate ester and propylene carbonate. Further, in this aspect, it is preferred that the weight ratio of propionate ester : propylene carbonate falls within a range of 25 : 75 to 75 : 25. Should be noted that a nonaqueous solvent in this aspect can contain propionate ester and propylene carbonate, and further the decomposition product thereof.

Examples of the electrolyte include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), and lithium trifluoromethanesulfonate ($LiCF_3SO_3$). As the electrolyte, one electrolyte may be used alone, or a mixture in which two or more electrolytes are mixed may be used.

The amount of the electrolyte dissolved in a nonaqueous solvent is desirably from 0.5 mol/L to 3 mol/L. Should be noted that, if the dissolution amount is extremely high, the electrolyte may not completely dissolve into the electrolyte solution.

(4) Separator

As the separator, it is not particularly limited, and for example, a microporous membrane, a woven fabric, a nonwoven fabric, a stack of members each of which is formed of the same material of the above-described materials or formed of the different material from each other, or the like can be used. Examples of the material for forming a separator include polyethylene, polypropylene, an ethylenepropylene copolymer, an ethylene-butene copolymer, and cellulose.

(5) Container

As the container, for example, a metallic container or a container made of a laminate film can be used, and it is not particularly limited.

By using a metallic container as the container, a nonaqueous electrolyte battery that is excellent in the impact resistance and in the long-term reliability can be realized. By using a container made of a laminate film as the container, a nonaqueous electrolyte battery that is excellent in the corrosion resistance can be realized and, at the same time, the weight reduction of the nonaqueous electrolyte battery can be achieved.

As the metallic container, for example, a metallic container having a wall thickness within a range of from 0.2 mm to 1 mm can be used. The metallic container more preferably has a wall thickness of 0.3 to 0.8 mm or less.

The metallic container preferably contains at least one selected from the group consisting of Fe, Ni, Cu, Sn and Al. The metallic container can be made of, for example, aluminum, an aluminum alloy, iron, nickel (Ni)-plated iron, stainless steel (SUS), or the like. The aluminum alloy is preferably an alloy containing an element such as magnesium, zinc, or silicon. When a transition metal such as iron, copper, nickel, or chromium is contained in the alloy, the content of the transition metal is preferably 1% by weight or less. As a result, the long-term reliability and heat dissipation under a high temperature environment can be dramatically improved.

As the container made of a laminate film, for example, a container having a thickness within a range of from 0.1 mm to 2 mm can be used. The thickness of the laminate film is more preferably 0.2 mm or less.

As the laminate film, a multilayer film that contains a metal layer, and resin layers sandwiching the metal layer therebetween is used. The metal layer preferably includes a metal containing at least one selected from the group consisting of Fe, Ni, Cu, Sn and Al. The metal layer is preferably an aluminum foil or an aluminum alloy foil in order to reduce the weight of the metal layer. As the resin layer, for example, a polymer material such as polypropylene (PP), polyethylene (PE), nylon, or polyethylene terephthalate (PET) can be used. The laminate film can be subjected to sealing by thermal fusion to be formed into a shape of the container member.

Examples of the shape of the container member include flat type (thin type), square type, cylindrical type, coin type, and button type. The container member can have various dimensions depending on the application. For example, when the nonaqueous electrolyte battery according to the first embodiment is used in application of a portable electronic device, the container member can be miniaturized in accordance with the size of the electronic device on which the battery is to be mounted. Alternatively, when a nonaqueous electrolyte battery is mounted on a two- or four-wheel vehicle or the like, the container can be a container for a large battery.

(6) Positive electrode current-collecting tab, Negative electrode current-collecting tab, Positive electrode terminal and Negative electrode terminal

A positive electrode current-collecting tab, a negative electrode current-collecting tab, a positive electrode terminal, and a negative electrode terminal are desirably formed of, for example, aluminum or an aluminum alloy.

[Various Measurement Method]

[Capacity Ratio p/n]

The calculation method of a ratio of the capacity p per unit area of the positive electrode to the capacity n per unit area of the negative electrode, that is, a ratio p/n will be described below.

First, a nonaqueous electrolyte battery to be examined is provided. In the following, a nonaqueous electrolyte battery including a container made of a laminate film will be described as an example of the nonaqueous electrolyte battery to be examined. The nonaqueous electrolyte battery to be examined is a battery having a capacity of 80% or more of the rated capacity. The capacity retention ratio of the battery is determined by the following method. First, the battery is charged up to the upper limit of operating voltage. The current value at this time is a current value corresponding to the 1 C rate determined from the rated capacity. After the battery reached the upper limit of operating voltage, the voltage is kept for three hours. After the charging and the keeping the voltage, the battery is discharged up to the lower limit value of operating voltage at 1 C rate. The above cycle of charging and discharging is repeated three times in total, and the discharge capacity obtained at the third cycle of discharging is recorded. The ratio of the obtained discharge capacity to the rated capacity is defined as the capacity retention ratio.

Next, in order to prevent the reaction of components of the battery with atmospheric components or moisture when the battery is disassembled, the battery is placed, for example, in an inert gas atmosphere as in a glove box with an argon gas atmosphere. Next, the nonaqueous electrolyte battery is opened in such a glove box. For example, the nonaqueous electrolyte battery can be opened by cutting the heat-sealed portions present in the peripheries of the positive electrode current-collecting tab and the negative electrode current-collecting tab, respectively. From the opened nonaqueous electrolyte battery, the electrode group is taken out. If the taken-out electrode group includes the positive electrode lead and the negative electrode lead, the positive electrode lead and the negative electrode lead are cut while taking care not to allow the positive and negative electrodes to electrically short-circuit.

Next, the taken-out electrode group is disassembled into the positive electrode, the negative electrode, and the separator. After that, the weight $W_c$ [g] of the portion of positive electrode opposed to the negative electrode is measured. After that, a positive electrode sample including a 3-cm square of the positive electrode active material-containing layer is cut out of the positive electrode. The state-of-charge of the battery may be any state. Should be noted that, the positive electrode sample is cut out of the portion of the positive electrode opposed to the negative electrode. For example, if the positive electrode sample includes positive electrode active material-containing layers each of which is supported on each of both surfaces of the current collector, the positive electrode active material-containing layer supported on one surface of the current collector is peeled off, and the remainder is taken as a positive electrode sample.

Next, the weight $W_{cs}$ [g] of the cut-out positive electrode sample is measured. After the measurement, a two-pole type or three-pole type electrochemical measurement cell using the positive electrode sample as a working electrode and lithium metal foils for a counter electrode and a reference electrode is produced. The produced electrochemical measurement cell is charged up to the upper limit potential of 4.3 V (vs. Li/Li$^+$). The current value at this time is to be set to a current value $I_{1cc}$ [mA] corresponding to 1 C rate. The current value $I_{1cc}$ is determined by the following procedure. First, the capacity $C_{cs}$ [mAh] of the positive electrode sample is determined by a formula: $C_{cs} = C_n \times (W_{cs}/W_c)$. In the formula, the $C_n$ is a rated capacity [mAh] of the nonaqueous electrolyte battery to be examined. A current value that can charge or discharge this capacity $C_{cs}$ in one hour is defined as $I_{1cc}$ [mA] (= $C_{cs}$ [mAh]/1 [h]). After the potential reached 4.3 V (vs. Li/Li$^+$), the potential is kept for three hours. After the charging and the keeping the potential, the battery is discharged until the potential of the positive electrode reaches 3.0 V (vs. Li/Li$^+$) at the same current value as for the charging. The above cycle of charging and discharging is repeated three times in total, and the discharge capacity obtained at the third cycle of discharging is recorded. The capacity p [mAh/cm$^2$] per unit area of the positive electrode is obtained by dividing the obtained discharge capacity by the area of the positive electrode active material-containing layer that has been contained in the positive electrode sample assembled in the electrochemical measurement cell, that is, 9 cm$^2$ (= 3 cm $\times$ 3 cm).

Next, the weight $W_a$ [g] of the portion opposed to the positive electrode, of the negative electrode taken out of the disassembled electrode group is measured. After that, a negative electrode sample including a 3-cm square of negative electrode active material-containing layer is cut out of the negative electrode. The state-of-charge of the battery may be any state. Should be noted that the negative electrode sample is cut out of the portion of negative electrode opposed to the positive electrode. For example, if the negative electrode sample includes negative electrode active material-containing layers each of which is supported on each of both surfaces of the current collector, the negative electrode active material-containing layer supported on one surface of the current collector is peeled off, and the remainder is taken as a negative electrode sample.

Next, the weight $W_{as}$ [g] of the cut-out negative electrode sample is measured. After the measurement, a two-pole type or three-pole type electrochemical measurement cell using the negative electrode sample as a working electrode and lithium metal foils for a counter electrode and a reference electrode is produced. The produced electrochemical measurement cell is charged up to the lower limit potential of 1.0 V (vs. Li/Li$^+$). The current value at this time is a current value $I_{1ca}$ [A] corresponding to 1 C rate. The current value $I_{1ca}$ is determined by the following procedure. First, the capacity Cas [mAh] of the negative electrode sample is determined by a formula: Cas = $C_n \times (W_{as}/W_a)$. In the formula, as described above, the $C_n$ is a rated capacity [mAh] of the nonaqueous electrolyte battery to be examined. A current value that can charge or discharge this capacity Cas in one hour is defined as $I_{1ac}$ [mA] (= Cas [mAh]/1 [h]). After the potential reached 1.0 V (vs. Li/Li$^+$), the potential is kept for three hours. After the charging and the keeping the potential, the battery is discharged until the potential of the negative electrode reaches 2.0 V (vs. Li/Li$^+$) at the same current value as for the charging. The above cycle of charging and discharging is repeated three times in total, and the discharge capacity obtained at the last discharge is recorded. The capacity n [mAh/cm$^2$] per unit area of the negative electrode is obtained by dividing the obtained discharge capacity by the area of the negative electrode active material-containing layer that has been contained in the negative electrode sample assembled in the electrochemical measurement cell, that is, 9 cm$^2$ (= 3 cm $\times$ 3 cm).

The p/n is calculated by dividing the thus obtained capacity p per unit area of the positive electrode by the thus obtained capacity n per unit area of the negative electrode.

Should be noted that the positive electrode sample and the negative electrode sample, which are taken for calculation of the ratio p/n, are portions opposed to each other in the nonaqueous electrolyte battery.

[Identification Method of Positive Electrode Active Material and Negative Electrode Active Material]

The positive electrode active material contained in a nonaqueous electrolyte battery can be identified in accordance with the following method.

First, the nonaqueous electrolyte battery is discharged at 1 C until the battery voltage reaches 1.0 V. Next, the battery in such a state is disassembled in a glove box filled with argon. The positive electrode is taken out of the disassembled battery. The taken-out positive electrode is washed with an appropriate solvent. For example, ethyl methyl carbonate or the like may be used. If the washing is insufficient, an impurity phase of lithium carbonate, lithium fluoride, or the like may be mixed due to the influence of lithium ions remaining in the positive electrode. In such a case, it is favorable to use an airtight container in which the measurement can be performed in an inert gas atmosphere. After the washing, the positive electrode is subjected to vacuum drying. After the drying, the positive electrode active material-containing layer is peeled from the current collector by using a spatula or the like, and a positive electrode active material-containing layer in a powder form is obtained.

By subjecting the powder thus obtained to powder X-ray diffraction (XRD) measurement, the crystal structure of the compound contained in the powder can be identified. The measurement is performed in a measurement range of $2\theta$ of 10 to 90° with a CuKa ray as a radiation source. With this measurement, an X-ray diffraction pattern of the compound contained in the powder can be obtained. As the apparatus for the powder X-ray diffraction measurement, for example, SmartLab manufactured by Rigaku Corporation, is used. The measurement conditions are as follows: Cu target; 45 kV 200 mA; Solar slit: 5° in both of incident light and reception light; step width: 0.02 deg; scan speed: 20 deg/min; semiconductor detector: D/teX Ultra 250; sample plate holder: flat glass sample plate holder (thickness: 0.5 mm); and measurement range: a range of $10° \leq 2\theta \leq 90°$. When another apparatus is used, the following procedure is followed. First, measurement with the use of a standard Si powder for powder X-ray diffraction is performed in the other apparatus in order to find the conditions under which measurement results of a peak intensity and a peak top position similar to the results obtained by the above-described SmartLab manufactured by Rigaku Corporation are obtained. Subsequently, measurement of a sample is performed under the conditions.

In the measurement results, the mixed state of the active material can be determined by whether or not peaks attributed to a plurality of crystal structures appear.

Subsequently, the active material-containing layer is observed with a scanning electron microscope (SEM). Sampling of a sample is also performed under an inert atmosphere of argon, nitrogen, or the like, while the sample is not exposed to the air.

Some particles in a form of primary particles or secondary particles confirmed in the field of view are selected by using an SEM observation image at a magnification of 3000 times. At this time, the particles are selected such that the particle size distribution of the selected particles is as broad as possible. For the observed active material particles, the kind and composition of constituent elements of the active material are specified by energy dispersive X-ray spectroscopy (EDX). Consequently, it is possible to specify the kind and amount of the elements other than Li among the elements contained in each of the selected particles. The similar operation is performed on each of a plurality of active material particles to determine the mixed state of the active material particles.

Subsequently, the powder of the positive electrode active material-containing layer is weighed. The weighed powder is dissolved with a hydrochloric acid, and the resultant mixture is diluted with ion exchanged water, and then the metal content is calculated by inductively coupled plasma atomic emission spectroscopy (ICP-AES). If a plurality of kinds of active materials is present, the mass ratio is estimated from the content ratio of the elements specific to each active material. The specific element and the mass ratio of the active materials is determined from the composition of the constituent elements obtained by the energy dispersive X-ray spectroscopy.

Thus, the active material contained in the positive electrode of a nonaqueous electrolyte battery can be identified.

The negative electrode active material contained in a nonaqueous electrolyte battery can also be identified according to the procedure similar to that described previously. However, in this regard, in order to analyze the crystal state of the negative electrode active material, the active material to be measured is made to be in a state in which lithium ions are released from the active material. For example, the nonaqueous electrolyte battery is discharged at 1 C until the battery voltage reaches 1.0 V. However, even in a state in which the battery is discharged, lithium ions remaining in the active material may be present.

[Identification Method of Component of Nonaqueous Solvent Contained in Nonaqueous Electrolyte]

The identification method of components of the solvent contained in a nonaqueous electrolyte will be described below.

First, the nonaqueous electrolyte battery to be measured is discharged at 1 C until the battery voltage reaches 1.0 V. The discharged nonaqueous electrolyte battery is disassembled in a glove box in an inert atmosphere.

Subsequently, the nonaqueous electrolyte contained in the battery and the electrode group is extracted. If it is possible to take out the nonaqueous electrolyte from the position where the nonaqueous electrolyte battery is opened, the nonaqueous electrolyte is sampled as it is. In contrast, when the nonaqueous electrolyte to be measured is kept in the electrode group, the electrode group is further disassembled, and for example, the separator impregnated with the nonaqueous electrolyte is taken out. The nonaqueous electrolyte with which the separator is impregnated can be extracted, for example, by using a centrifugal separator or the like. Thus, the nonaqueous electrolyte can be sampled. Should be noted that, when the amount of nonaqueous electrolyte contained in the nonaqueous electrolyte battery is small, the nonaqueous electrolyte can also be extracted by immersing the electrode and the separator in an acetonitrile. The extraction amount can be calculated by measuring the weights of the acetonitrile before and after the extraction.

The thus-obtained sample of the nonaqueous electrolyte is subjected to, for example, a gas chromatography mass spectrometer (GC-MS) or nuclear magnetic resonance spectroscopy (NMR) to conduct the composition analysis. In the analysis, first, the kind of the propionate ester contained in the nonaqueous electrolyte is identified. Next, the calibration curve of the propionate esters contained in the nonaqueous electrolyte is prepared. If a plurality of kinds of propionate esters is contained, the calibration curves for respective propionate esters are prepared. By comparing the prepared calibration curve with the peak intensity or the area in the result obtained by measuring sample of the nonaqueous electrolyte, the mixing proportion of the propionate esters in the nonaqueous electrolyte can be calculated.

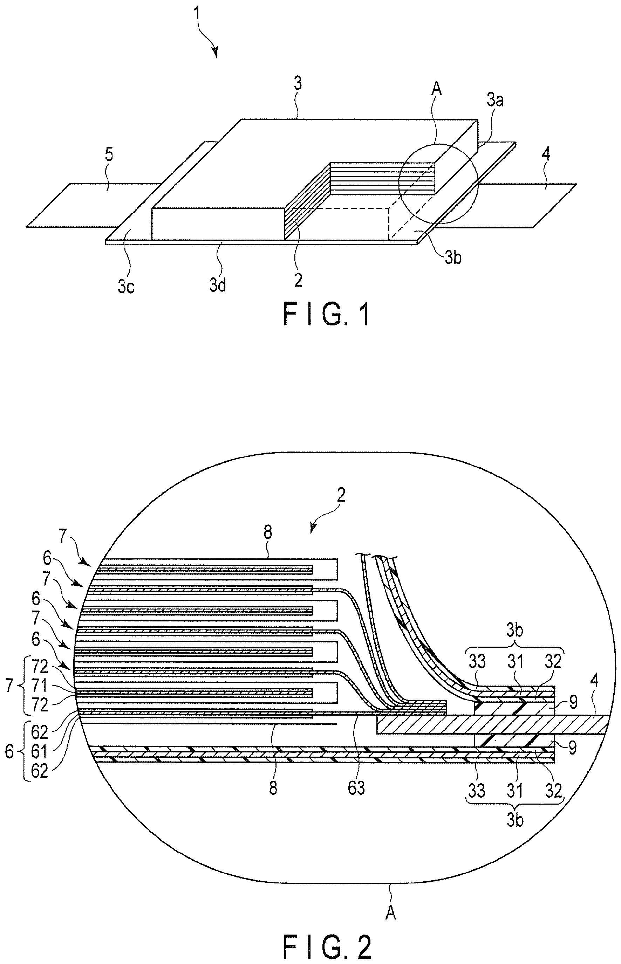

Next, with reference to FIGS. 1 to 3, an example of the nonaqueous electrolyte battery according to the embodiment will be described in more detail.

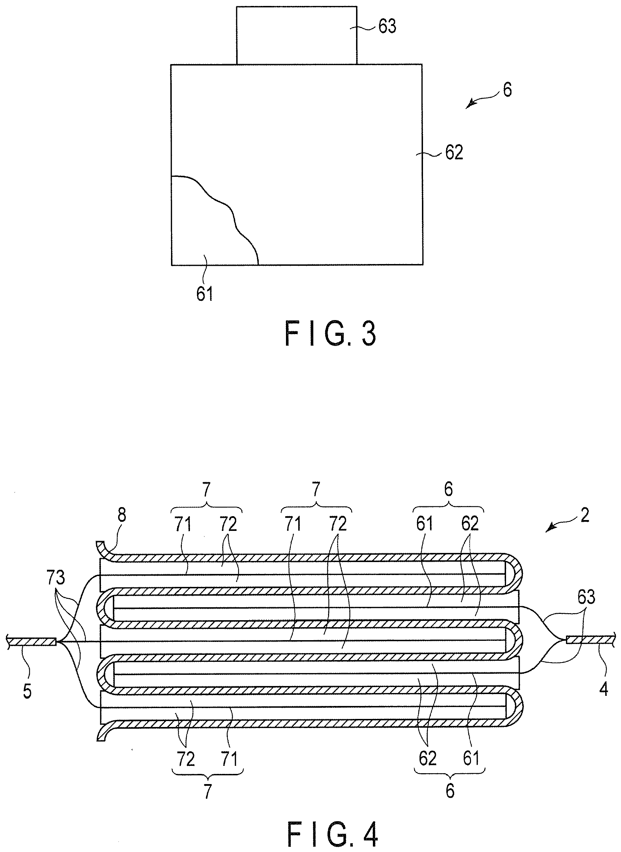

FIG. 1 is a schematic cut-away perspective view of an example of the nonaqueous electrolyte battery according to the embodiment. FIG. 2 is a schematic cross-sectional view of an A portion shown in FIG. 1. FIG. 3 is a schematic plan view of a positive electrode that is included in an example of the nonaqueous electrolyte battery according to the embodiment.

The nonaqueous electrolyte battery 1 according to a first example shown in FIGS. 1 to 3 includes an electrode group 2 shown in FIGS. 1 and 2, a container 3 shown in FIGS. 1 and 2, a positive electrode current-collecting tab 4 shown in FIGS. 1 and 2, and a negative electrode current-collecting tab 5 shown in FIG. 1.

The electrode group 2 shown in FIGS. 1 and 2 includes a plurality of positive electrodes 6, a plurality of negative electrodes 7, and one sheet of a separator 8.

As shown in FIGS. 2 and 3, each of the positive electrodes 6 includes a positive electrode current collector 61, and positive electrode active material-containing layers 62 provided on both surfaces of the positive electrode current collector 61. Further, as shown in FIGS. 2 and 3, the positive electrode current collector 61 contains a portion 63 on a surface of which a positive electrode active material-containing layer 62 is not provided, and the portion 63 serves as a positive electrode lead. As shown in FIG. 3, the positive electrode lead 63 is a narrow portion of which the width is narrower than that of the positive electrode active material-containing layer 62.

As shown in FIG. 2, each of the negative electrodes 7 includes a negative electrode current collector 71, and negative electrode active material-containing layers 72 provided on both surfaces of the negative electrode current collector 71. Further, although not shown, the negative electrode current collector 71 includes a portion on a surface of which the negative electrode active material-containing layer 72 is not provided, and this portion serves as a negative electrode lead.

As partially shown in FIG. 2, the separator 8 is zigzag-folded. In each space defined by the surfaces opposed to each other of the zigzag-folded separator 8, one of the positive electrodes 6 or one of the negative electrodes 7 is provided. With this arrangement, the positive electrodes 6 and the negative electrodes 7 are stacked such that the positive electrode active material-containing layer 62 and the negative electrode active material-containing layer 72 face each other with the separator 8 sandwiched therebetween, as shown in FIG. 2. In this way, the electrode group 2 is formed.

As shown in FIG. 2, each of the positive electrode leads 63 of the electrode group 2 extends from the electrode group 2. As shown in FIG. 2, these positive electrode leads 63 are collected into one, and connected to the positive electrode current-collecting tab 4. Further, although not shown, each of the negative electrode leads of the electrode group 2 also extends from the electrode group 2. Although not shown, these negative electrode leads are collected into one, and connected to the negative electrode current-collecting tab 5.

Such an electrode group 2 is housed in a container 3 as shown in FIGS. 1 and 2.

The container 3 is formed of an aluminum-containing laminate film including an aluminum foil 31 and resin films 32 and 33 formed on both surfaces of the aluminum foil 31. The aluminum-containing laminate film for forming the container 3 is folded by using a folding portion 3d as a fold such that the resin film 32 faces the inside to house the electrode group 2. Further, as shown in FIGS. 1 and 2, in an edge portion 3b of the container 3, the portions facing each other of the resin film 32 sandwich the positive electrode current-collecting tab 4 therebetween. Similarly, in an edge portion 3c of the container 3, the portions facing each other of the resin film 32 sandwich the negative electrode current-collecting tab 5 therebetween. With such an arrangement, the positive electrode current-collecting tab 4 and the negative electrode current-collecting tab 5 extend in directions opposite to each other, respectively from the container 3.

The edge portions 3a, 3b, and 3c of the container 3 excluding the portions where the positive electrode current-collecting tab 4 or the negative electrode current-collecting tab 5 are sandwiched, are heat sealed by thermal fusion of the portions opposed to each other of the resin film 32.

In addition, in the nonaqueous electrolyte battery 1, in order to improve the bonding strength between the positive electrode current-collecting tab 4 and the resin film 32, an insulation film 9 is provided between the positive electrode current-collecting tab 4 and the resin film 32, as shown in FIG. 2. Further, in the edge portion 3b, the positive electrode current-collecting tab 4 and the insulation film 9 are heat-sealed by thermal fusion, and the resin film 32 and the insulation film 9 are heat-sealed by thermal fusion. Similarly, although not shown, an insulation film 9 is also provided between the negative electrode current-collecting tab 5 and the resin film 32. Moreover, in the edge portion 3c, the negative electrode current-collecting tab 5 and the insulation film 9 are heat-sealed by thermal fusion, and the resin film 32 and the insulation film 9 are heat-sealed by thermal fusion. That is, in the nonaqueous electrolyte battery 1 shown in FIGS. 1 to 3, all of the edge portions 3a, 3b, and 3c of the container 3 are heat-sealed.

The container 3 further houses a nonaqueous electrolyte that is not shown. The electrode group 2 is impregnated with the nonaqueous electrolyte.

In the nonaqueous electrolyte battery 1 shown in FIGS. 1 to 3, as shown in FIG. 2, the positive electrode leads 63 are collected in the bottom of the electrode group 2. Similarly, although not shown, the negative electrode leads are collected in the bottom of the electrode group 2. However, for example, as shown in FIG. 4, the positive electrode leads 63 may be collected into one in the vicinity of the middle level of the electrode group 2, and connected to the positive electrode current-collecting tab 4, and the negative electrode leads 73 may be collected into one in the vicinity of the middle level of the electrode group 2, and connected to the negative electrode current-collecting tab 5, respectively.

According to the embodiment described above, a nonaqueous electrolyte battery is provided. This nonaqueous electrolyte battery includes a positive electrode, a negative electrode, and a nonaqueous electrolyte. The positive electrode contains a lithium cobalt composite oxide. The negative electrode contains a lithium titanium composite oxide. A capacity ratio p/n of the positive electrode and the negative electrode satisfies a formula (1): $1.25 \leq p/n \leq 1.6$. The nonaqueous electrolyte contains at least one propionate ester. The content w of at least one propionate ester in the nonaqueous electrolyte is 20% by weight or more and less than 64% by weight with respect to the weight of the nonaqueous electrolyte. The nonaqueous electrolyte battery according to the embodiment satisfies a formula (2): $13 < w/(p/n) \leq 40$. This nonaqueous electrolyte battery can suppress the gas generation during charging and discharging, due to the interaction between the decomposition product of at least one propionate ester and the lithium cobalt composite oxide. As a result, the nonaqueous electrolyte battery according to the embodiment can exhibit excellent life performance.

(Second embodiment)

According to an embodiment, a battery pack is provided. The battery pack includes the nonaqueous electrolyte battery according to the embodiment.

The battery pack according to the embodiment may include one nonaqueous electrolyte battery. Alternatively, the battery pack according to the embodiment may also include nonaqueous electrolyte batteries. The nonaqueous electrolyte batteries can be electrically connected in series, or can be electrically connected in parallel. Alternatively, the nonaqueous electrolyte batteries may also be connected in a combination of a series connection and a parallel connection.

When the battery pack includes nonaqueous electrolyte batteries, at least one battery may be the nonaqueous electrolyte battery according to the embodiment. Each of the nonaqueous electrolyte batteries may be the nonaqueous electrolyte battery according to the embodiment. For example, the battery pack according to the embodiment may include 5 or 6 nonaqueous electrolyte batteries, and each of these batteries is the nonaqueous electrolyte battery according to the embodiment. These nonaqueous electrolyte batteries may be connected, for example, in series.

Further, the connected nonaqueous electrolyte batteries can constitute a battery module. That is, the battery pack according to the embodiment can also include a battery module.

The battery pack according to the embodiment can include, for example, battery modules. The battery modules can be connected in series, in parallel, or in a combination of a series connection and a parallel connection.

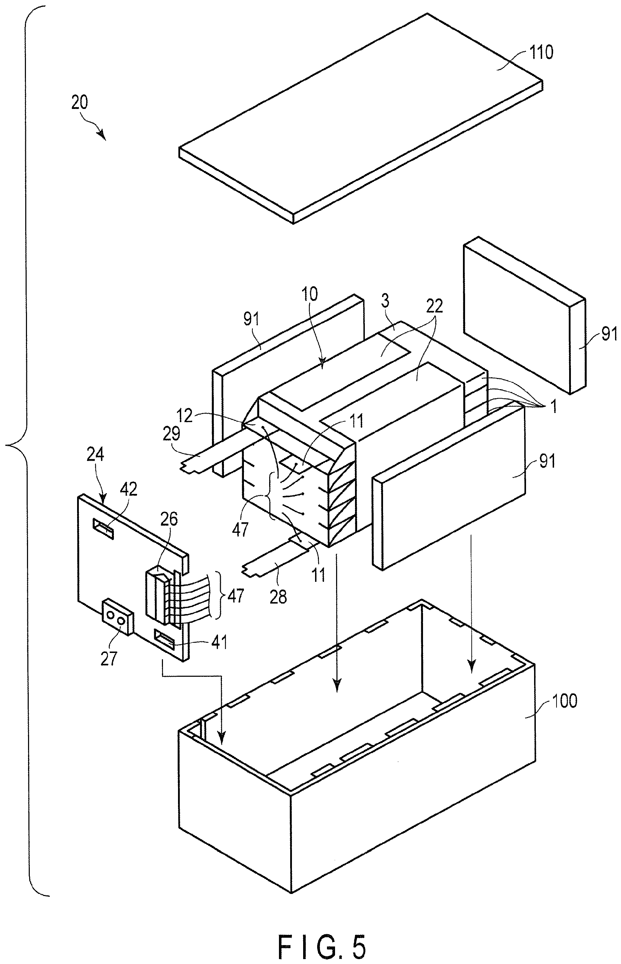

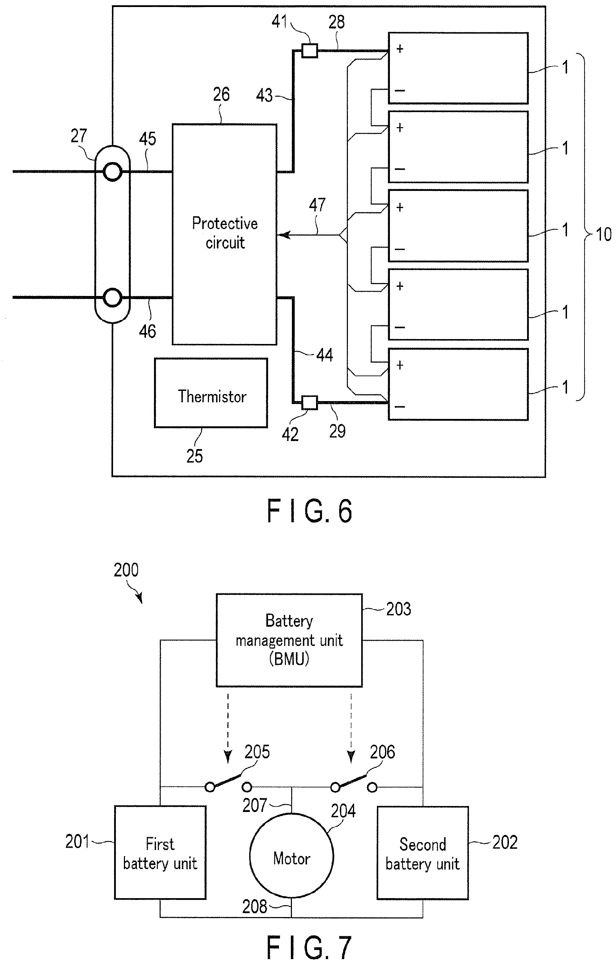

Hereinafter, an example of the battery pack according to the embodiment will be described with reference to FIGS. 5 and 6.

FIG. 5 is an exploded perspective view of an example of the battery pack according to the embodiment. FIG. 6 is a block diagram showing an electric circuit of the battery pack of FIG. 5.

The battery pack 20 shown in FIGS. 5 and 6 includes single batteries 1. Each of the single batteries 1 is a flat-type nonaqueous electrolyte battery according to an example of the embodiment. The single batteries 1 include an electrode group not shown, a nonaqueous electrolyte not shown, a container 3 shown in FIG. 5, and a positive electrode terminal 11 and a negative electrode terminal 12 shown in FIG. 5. The electrode group and the nonaqueous electrolyte are housed in the container 3. The electrode group is impregnated with a nonaqueous electrolyte.

The container 3 has a rectangular cylindrical shape with bottom. The container 3 is formed of, for example, a metal such as aluminum, an aluminum alloy, iron, or stainless steel.

The electrode group includes a positive electrode, a negative electrode, and a separator, similarly as in the electrode group included in the nonaqueous electrolyte battery that has been described with reference to FIGS. 1 to 3.

The positive electrode terminal 11 is electrically connected to a positive electrode. The negative electrode terminal 12 is electrically connected to a negative electrode. One end of the positive electrode terminal 11 and one end of the negative electrode terminal 12 extend respectively from the same end face of the single battery 1.

The single batteries 1 are stacked such that each positive electrode terminal 11 and each negative electrode terminal 12 both extending outward are oriented in the same direction, and the single batteries are fastened with an adhesive tape 22 to form a battery module 10. Those single batteries 1 are electrically connected to each other in series as shown in FIG. 6.

A printed wiring board 24 is arranged facing the end face from which the negative electrode terminal 12 and the positive electrode terminal 11 of each of the single batteries 1 extend. On the printed wiring board 24, a thermistor 25, a protective circuit 26, and a power distribution terminal 27 to an external device, which are shown in FIG. 6, respectively, are mounted. Should be noted that, an electric insulating plate (not shown) is attached to the surface of the printed wiring board 24 facing the battery module 10 to avoid unnecessary connection of the wires of the battery module 10.

One end of a positive electrode-side lead 28 is electrically connected to the positive electrode terminal 11 positioned in the bottom of the battery module 10. The other end of the positive electrode-side lead 28 is inserted into a positive electrode connector 41 of the printed wiring board 24 so as to be electrically connected. One end of a negative electrode-side lead 29 is electrically connected to the negative electrode terminal 12 positioned in the top of the battery module 10. The other end of the negative electrode-side lead 29 is inserted into a negative electrode connector 42 of the printed wiring board 24 so as to be electrically connected. These connectors 41 and 42 are connected to a protective circuit 26 via the wires 43 and 44 provided on the printed wiring board 24.

The thermistor 25 detects a temperature of the single batteries 1, and the detection signal is transmitted to the protective circuit 26. The protective circuit 26 can shut down a plus-side wire 45 and a minus-side wire 46 between the protective circuit 26 and the power distribution terminal 27 to an external device under predetermined conditions. An example of the predetermined conditions is, for example, a condition in which the temperature detected by the thermistor 25 reached a predetermined temperature or more. Further, another example of the predetermined conditions is, for example, a condition in which overcharge, over-discharge, over current, or the like of the single batteries 1 is detected. The detection of the overcharge or the like is performed on each of the single batteries 1 or the whole of the battery module 10. When the detection is performed on each of single batteries 1, the battery voltage may be detected, or the potential of the positive electrode or the potential of the negative electrode may be detected. In the latter case, a lithium electrode to be used as a reference electrode is inserted into each of single batteries 1. In the case of a battery pack 20 of FIGS. 5 and 6, a wire 47 for voltage detection is connected to each of the single batteries 1. Detection signals are transmitted to the protective circuit 26 via the wire 47.

On three side surfaces of the battery module 10, excluded a side surface from which the positive electrode terminal 11 and the negative electrode terminal 12 project, protective sheets 91 made of rubber or resin are arranged.

The battery module 10 is housed in a housing container 100 together with each of the protective sheets 91 and the printed wiring board 24. That is, the protective sheets 91 are arranged on both internal surfaces in a long-side direction of the housing container 100 and one internal surface in a short-side direction of the housing container 100, respectively, and the printed wiring board 24 is arranged on the other internal surface in the short-side direction. The battery module 10 is positioned in a space surrounded by the protective sheets 91 and the printed wiring board 24. A lid 110 is attached to an upper face of the housing container 100.

Should be noted that, in order to fix the battery module 10, a thermally-shrinkable tape may be used in place of the adhesive tape 22. In a case of using a thermally-shrinkable tape, protective sheets are arranged on both of the side surfaces of the battery module 10, the thermally-shrinkable tape is wound around the battery module 10 including the protective sheets, and then the thermally-shrinkable tape is thermally shrunk in order to bind the battery module 10.

In FIGS. 5 and 6, an embodiment in which the single batteries 1 are connected in series is shown. In contrast, in order to increase the battery capacity, the single batteries 1 may be connected in parallel. Further, the assembled battery packs may be connected in series and/or in parallel.

Further, the aspect of the battery pack according to the embodiment can be appropriately changed depending on the application thereof. As the application of the battery pack according to the embodiment, an application in which cycle performance with large current performance is desired is preferable. As the specific application, a power source for a digital camera, or an on-vehicle use for a two- or four-wheel hybrid electric automobile, a two- or four-wheel electric automobile, a power-assisted bicycle, or the like can be mentioned. In particular, the battery pack according to the embodiment is suitably used for a battery mounted on a vehicle.

The battery pack according to an embodiment includes the nonaqueous electrolyte battery according to an embodiment, and therefore, can exhibit excellent life performance.

(Third embodiment)

According to an embodiment, a battery system is provided. The battery system includes a first battery unit and a second battery unit electrically connected in parallel to the first battery unit. The first battery unit includes the nonaqueous electrolyte battery according to the embodiment. The second battery unit includes a lead-acid storage battery.

The first battery unit needs only include at least one nonaqueous electrolyte battery according to the embodiment. For example, the first battery unit can include one nonaqueous electrolyte battery according to the embodiment. Alternatively, the first battery unit can include nonaqueous electrolyte batteries each of which is the nonaqueous electrolyte battery according to the embodiment. In this case, the nonaqueous electrolyte batteries can be, for example, electrically connected to each other so as to constitute a battery module. The connection of the nonaqueous electrolyte batteries may be either series connection or parallel connection, or may be a combination of series connection and parallel connection.

A second battery unit needs only include at least one lead-acid storage battery. For example, the second battery unit may include one lead-acid storage battery. Alternatively, the second battery unit may include lead-acid storage batteries. In this case, the lead-acid storage batteries are, for example, electrically connected so as to constitute a battery module. The connection of the lead-acid storage batteries may be either series connection or parallel connection, or may be a combination of series connection and parallel connection.

The nonaqueous electrolyte battery included in the first battery unit is the nonaqueous electrolyte battery according to the embodiment, and has a value of the capacity ratio p/n of from 1.25 to 1.6. As described in the section regarding the nonaqueous electrolyte battery according to the embodiment, the nonaqueous electrolyte battery according to the embodiment in which the value of the capacity ratio p/n is from 1.25 to 1.6 can exhibit a low open circuit voltage (OCV). In the nonaqueous electrolyte battery that can exhibit a low OCV, the operable voltage per battery can be set in a narrow range. Here, the operating voltage of the battery unit can be adjusted, for example, by changing the number of batteries in series (the number of batteries connected in series) included in the battery unit. The narrower the range of operable voltage per battery is, the easier it is to adjust the operating voltage of a battery unit including batteries. Therefore, the voltage of the first battery unit can be easily adjusted to a value suitable for a lead-acid storage battery. Accordingly, the first battery unit can exhibit excellent voltage-compatibility with a lead-acid storage battery. Therefore, the first battery unit including the nonaqueous electrolyte battery according to the embodiment can exhibit a large usable capacity within the usable voltage range of the lead-acid storage battery (voltage range capable of suppressing the deterioration of the lead-acid storage battery). Therefore, in a battery system according to the embodiment, the deterioration of the second battery unit including a lead-acid storage battery can be suppressed.

The battery system can further include a power distribution terminal. The battery system can be connected to a load via the power distribution terminal. The load can be electrically connected in parallel to, for example, the first battery unit and the second battery unit. With such a connection, the load can receive power supply from both of the first battery unit and the second battery unit, or can also receive power supply from only one of the first battery unit and the second battery unit. The load may be a load assembled inside the battery system, or may be an external load that can be disconnected from the battery system. The first battery unit and/or the second battery unit can supply power to the load via a power distribution terminal.

For example, the load may be an electric motor. For example, the first battery unit and/or the second battery unit can supply power to an electric motor to drive the electric motor.

Further, the power distribution terminal can also be connected to an external power source. The first battery unit and/or the second battery unit can receive power from an external power source via the power distribution terminal. Alternatively, the first battery unit and/or the second battery unit can also receive regenerative energy via the power distribution terminal. It is preferred that the first battery unit can receive regenerative energy via the power distribution terminal. The regenerative energy will be described later.

The battery system can further include a battery management unit (BMU). The battery management unit can be configured to control the operation of each of the first battery unit and the second battery unit. For example, the battery management unit can control the operation of each of the first battery unit and the second battery unit based on the state-of-charge (SOC) and/or the voltage of each of the first battery unit and the second battery unit. The battery management unit can be configured to control, for example, the power supply from the first battery unit to a load, the power supply from the second battery unit to a load, the power supply from an external power source to the first battery unit, the power supply from an external power source to the second battery unit, and the input of regenerative energy to the first battery unit.

For example, the battery system can be mounted on a vehicle such as a two- or four-wheel hybrid electric automobile, a two- or four-wheel electric automobile, or a power-assisted bicycle.

The vehicle on which a battery system is mounted can further include, for example, an alternator mechanically connected to a driving system of a vehicle. The alternator is an AC generator that can convert mechanical energy into electric energy. Therefore, the alternator can convert part of the mechanical energy generated by a driving system into electric energy. The electric energy converted by an alternator is an AC current, and is, for example, transferred from the alternator to a rectifier. The rectifier can convert the AC current into a DC current. The DC current converted by the rectifier can be supplied to the first battery unit and/or the second battery unit.

Further, the alternator may be further connected to a braking system of a vehicle. In this aspect, the alternator can regenerate the mechanical energy generated when a vehicle is braked to electric energy. Such a regenerative energy can be transmitted to the first battery unit and/or the second battery unit via a rectifier and a power distribution terminal of a battery system.

Next, the battery system according to the embodiment will be described in more detail with reference to the drawing.

FIG. 7 is an electric circuit diagram of an example of the battery system according to the embodiment.

The battery system 200 shown in FIG. 7 includes a first battery unit 201, and a second battery unit 202 electrically connected in parallel to the first battery unit 201.

The first battery unit 201 includes the example of the nonaqueous electrolyte battery 1 described with reference to FIGS. 1 to 3. The second battery unit 202 includes a lead-acid storage battery not shown.

The battery system 200 further includes a battery management unit (BMU) 203 and a motor 204 as a load. The motor 204 is electrically connected to a first battery unit 201 via a switch 205, and wires 207 and 208. The motor 204 is electrically connected to a second battery unit 202 via a switch 206, and wires 207 and 208. Each of the wires 207 and 208 includes a power distribution terminal (not shown) to be connected to the motor 204.

The battery management unit (BMU) 203 can switch a switch 205 based on the state-of-charge and/or the voltage of the first battery unit 201 so as to switch between supply and shut-down of power from the first battery unit 201 to the motor 204. Similarly, the battery management unit (BMU) 203 can switch a switch 206 based on the state-of-charge (SOC) and/or the voltage of the second battery unit 202 so as to switch between supply and shut-down of power from the second battery unit 202 to the motor 204.

The battery system according to the embodiment includes a first battery unit including the nonaqueous electrolyte battery according to the embodiment, and therefore, can exhibit excellent life performance.

(Examples)

Examples will be described below.

[Example 1]

A nonaqueous electrolyte battery was produced by the following procedure.

[Production of Positive Electrode]

As the positive electrode active material, a powder of a lithium cobalt composite oxide (composition formula: $LiCoO_2$) having an average particle size of 10 $\mu$m was provided. As the conductive agent, acetylene black and graphite were provided. As the binder, polyvinylidene fluoride (PVdF) was provided. The lithium cobalt composite oxide, the acetylene black, the graphite, and the PVdF were mixed so as to be 85% by weight, 5.0% by weight, 5.0% by weight, and 5.0% by weight, respectively. The obtained mixture was put into N-methyl pyrrolidone as a solvent, and the resulting mixture was stirred to prepare a slurry. The positive electrode slurry obtained after stirring was applied onto both surfaces of an aluminum foil having a thickness of 20 $\mu$m by a coating machine. The coating amount was adjusted such that the weight after drying per 1 m$^2$ of the active material-containing layer applied on one surface was 85 g/m$^2$. At this time, a portion to which the slurry was not applied was left on the aluminum foil. The obtained coating was dried, and then the aluminum foil with the dried coating was rolled by a roll press machine such that the electrode density (excluding the current collector) was 2.8 g/cm3. Next, the portion of the aluminum foil, to which the slurry was not applied, was die-cut to form a positive electrode lead. Thus, positive electrodes were produced.

[Production of Negative Electrode]

As the negative electrode active material, a powder of a spinel-type lithium titanium composite oxide (composition formula: $Li_4Ti_5O_{12}$) was provided. As the conductive agent, acetylene black and graphite were provided. As the binder, polyvinylidene fluoride (PVdF) was provided. The lithium titanium composite oxide, the acetylene black, the graphite, and the PVdF were mixed so as to be 85% by weight, 5.0% by weight, 5.0% by weight, and 5.0% by weight, respectively. The obtained mixture was put into N-methyl pyrrolidone, and the resulting mixture was stirred to prepare a slurry. The negative electrode slurry obtained after stirring was applied onto both surfaces of an aluminum foil having a thickness of 20 $\mu$m by a coating machine. The coating amount was adjusted so that the weight after drying per 1 m$^2$ of the active material-containing layer applied on one surface was 50 g/m$^2$. At this time, a portion to which the slurry was not applied was left on the aluminum foil. The obtained coating was dried, and then the aluminum foil with the dried coating was rolled by a roll press machine such that the electrode density (excluding the current collector) was 2.0 g/cm$^3$. Next, the portion of the aluminum foil, to which the slurry was not applied, was die-cut to form a negative electrode lead. Thus, negative electrodes were produced.

[Measurement of Ratio p/n]

The electrode capacity was measured in accordance with the procedure described above by using a portion of each of the produced positive electrode and negative electrode. The value of the capacity ratio p/n of the positive electrode to the negative electrode per unit area (1 cm$^2$) was 1.4.

[Production of Electrode Group]

A belt-like microporous membrane separator having a thickness of 30 $\mu$m was provided. Next, the separator was zigzag-folded. Subsequently, the positive electrodes and the negative electrodes were alternately inserted into spaces each defined by the surfaces facing each other of the zigzag-folded separator to obtain a stack. In the end, a winding stop tape was stuck on the obtained stack, and the resulting stack was used as an electrode group. The electrode area and the number of layers were adjusted such that the discharge capacity of the electrode group became 3.0 Ah.

[Connection of Positive Electrode Current-Collecting Tab and Negative Electrode Current-Collecting Tab to Electrode Group]

A positive electrode current-collecting tab and a negative electrode current-collecting tab were produced by using aluminum. Subsequently, the positive electrode leads of the positive electrodes were collected into one and connected to the positive electrode current-collecting tab. Similarly, the negative electrode leads of the negative electrodes were collected into one and connected to the negative electrode current-collecting tab. Thus, the positive electrode current-collecting tab and the negative electrode current-collecting tab were arranged to extend in directions opposite to each other respectively from the electrode group such that the current collection from the positive electrode and the current collection from the negative electrode were easily performed.

[Production of Container 3]

As the container, an aluminum-containing laminate film was used. First, the aluminum-containing laminate film was formed such that a shape capable of housing the above-described electrode group was obtained. In the container of aluminum-containing laminate film thus formed, the electrode group was housed as described previously with reference to FIGS. 1 and 2. At this time, as described with reference to FIG. 2, the positive electrode current-collecting tab was sandwiched between the portions facing each other of the resin film in one edge portion of the container (edge portion 3b in FIG. 2). Similarly, although not shown even in FIG. 2, the negative electrode current-collecting tab was sandwiched between the portions facing each other of the resin film in another edge portion of the container. An insulation film was provided between the positive electrode current-collecting tab and the resin film and between the negative electrode current-collecting tab and the resin film, respectively.
Subsequently, the portions facing each other in an edge portion of the resin film were held together by thermal fusion while leaving a portion not heat-sealed. At the same time, in one edge portion, a portion of the resin film and the insulation film facing the portion were held together by thermal fusion, and the positive electrode current-collecting tab and the insulation film facing the positive electrode current-collecting tab were held together by thermal fusion. Similarly, in one edge portion, a portion of the resin film and the insulation film facing the portion were held together by thermal fusion, and the negative electrode current-collecting tab and the insulation film opposed to the negative electrode current-collecting tab were held together by thermal fusion. Thus, a cell before-injection was produced.

[Preparation of Nonaqueous Electrolyte]

The nonaqueous electrolyte was prepared by the following procedure.
First, as the nonaqueous solvent, propylene carbonate and ethyl propionate were provided. Further, as the electrolyte, lithium hexafluorophosphate (LiPF$_6$) was provided. These were mixed such that the mixing ratio of propylene

carbonate : ethyl propionate : LiPF$_6$ was 50% by weight : 40% by weight : 10% by weight. In this way, the nonaqueous electrolyte was prepared. The content w of the ethyl propionate in the prepared nonaqueous electrolyte was 40% by weight with respect to the weight of the nonaqueous electrolyte.

[Production of Nonaqueous Electrolyte Battery]

The prepared nonaqueous electrolyte was injected into a container of the cell before-injection housing an electrode group to produce a nonaqueous electrolyte battery.

[Measurement of Rated Capacity of Nonaqueous Electrolyte Battery]

The obtained nonaqueous electrolyte battery was charged at a constant current of 0.5 A in a thermostatic chamber kept at 25°C until the voltage reached 2.8 V. Next, the voltage of 2.8 V of the nonaqueous electrolyte battery was kept for 3 hours in the same thermostatic chamber. After that, the nonaqueous electrolyte battery was left for 30 minutes in an open circuit state. Subsequently, the nonaqueous electrolyte battery was discharged at a constant current of 0.5 A until the voltage reached 2 V. The above cycle of charging-leaving-discharging was repeated three times. The capacity obtained during the discharging at third cycle was taken as the rated capacity. The rated capacity of the nonaqueous electrolyte battery 1 of Example 1 was 3.0 Ah. After that, the nonaqueous electrolyte battery was charged up to a charging rate of 50% with respect to the rated capacity.

[Evaluation]

The gas generation amount and capacity retention ratio of the nonaqueous electrolyte battery of Example 1 were measured by the following procedure.

(Storage Test at Constant Temperature)

The nonaqueous electrolyte battery of Example 1 was charged at a constant current of 0.5 A in a thermostatic chamber kept at 25°C until the voltage reached 2.8 V. Next, the voltage of 2.8 V of the nonaqueous electrolyte battery was kept for 3 hours in the same thermostatic chamber. After that, the nonaqueous electrolyte battery was left for 30 minutes in an open circuit state.
Subsequently, the thickness in the central portion in the height and the width of the nonaqueous electrolyte battery was measured, and the measurement result was taken as the reference thickness. Here, the thickness of the nonaqueous electrolyte battery was set to be the smallest dimension in the three directions orthogonal to one another. The dimensions in the three directions of the nonaqueous electrolyte battery of Example 1 were 100 mm, 120 mm, and 5.5 mm, respectively.
After that, the nonaqueous electrolyte battery was left in a thermostatic chamber kept at 60°C for one week. After the lapse of one week, the nonaqueous electrolyte battery was left in a thermostatic chamber kept at 25°C for three hours. Next, the nonaqueous electrolyte battery was discharged at a constant current of 0.5 A until the voltage reached 2 V. After that, the nonaqueous electrolyte battery was charged at a constant current of 0.5 A in the thermostatic chamber kept at 25°C until the voltage reached 2.8 V. Subsequently, the voltage of 2.8 V of the nonaqueous electrolyte battery was kept for 3 hours in the same thermostatic chamber. After that, the nonaqueous electrolyte battery was left for 30 minutes in an open circuit state. Next, the nonaqueous electrolyte battery was discharged at a constant current of 0.5 A until the voltage reached 2 V. The above cycle of charging-leaving-discharging was repeated three times. After that, the nonaqueous electrolyte battery was charged at a constant current of 0.5 A until the voltage reached 2.8 V. Subsequently, the voltage of 2.8 V of the nonaqueous electrolyte battery was kept for three hours in the same thermostatic chamber. Next, the nonaqueous electrolyte battery was left in the thermostatic chamber kept at 60°C for one week. The above procedure was repeated five times.
The above procedure was repeated five times, and then for the nonaqueous electrolyte battery, the above cycle of charging-leaving-discharging was repeated three times. The capacity obtained at the discharging in the third cycle was taken as the capacity after storage. The capacity retention ratio was calculated by dividing the capacity after storage by the rated capacity.
Next, the nonaqueous electrolyte battery was charged at a constant current of 0.5 A in the thermostatic chamber kept at 25°C until the voltage reached 2.8 V. Subsequently, the voltage of 2.8 V of the nonaqueous electrolyte battery was kept for 3 hours in the same thermostatic chamber. After that, the nonaqueous electrolyte battery was left for 30 minutes in an open circuit state.
After that, the thickness in the central portion in the height and the width of the nonaqueous electrolyte battery was measured, and the measurement result was taken as the thickness after storage. The battery swelling ratio was obtained by dividing the thickness after storage by the reference thickness.

[Example 2]

A nonaqueous electrolyte battery was produced by the same procedure as in Example 1 except for using a nonaqueous electrolyte produced as follows.
First, as the nonaqueous solvent, propylene carbonate, and ethyl propionate were provided. Further, as the electrolyte, lithium hexafluorophosphate ($LiPF_6$) was provided. These were mixed such that the mixing ratio of propylene carbonate : ethyl propionate : $LiPF_6$ was 45% by weight : 45% by weight : 10% by weight. Thus, the nonaqueous electrolyte was prepared. The content w of the ethyl propionate in the prepared nonaqueous electrolyte was 45% by weight with respect to the weight of the nonaqueous electrolyte.

[Example 3]

A nonaqueous electrolyte battery was produced by the same procedure as in Example 1 except for using a nonaqueous electrolyte prepared as follows.
First, as the nonaqueous solvent, propylene carbonate and ethyl propionate were provided. Further, as the electrolyte, lithium hexafluorophosphate ($LiPF_6$) was provided. These were mixed such that the mixing ratio of propylene carbonate : ethyl propionate : $LiPF_6$ was 40% by weight : 50% by weight : 10% by weight. Thus, the nonaqueous electrolyte was prepared. The content w of the ethyl propionate in the prepared nonaqueous electrolyte was 50% by weight with respect to the weight of the nonaqueous electrolyte.

[Example 4]

A nonaqueous electrolyte battery was produced by the same procedure as in Example 1 except that methyl propionate was used in place of the ethyl propionate as the solvent when a nonaqueous electrolyte was prepared.

[Example 5]

A nonaqueous electrolyte battery was produced by the same procedure as in Example 1 except that propyl propionate was used in place of the ethyl propionate as the solvent when a nonaqueous electrolyte was prepared.

[Example 6]

A nonaqueous electrolyte battery was produced by the same procedure as in Example 1 except that the coating amount of the positive electrode slurry was adjusted such that the weight after drying per 1 $m^2$ of the active material-containing layer applied on one surface was 75 $g/m^2$. The p/n ratio of the nonaqueous electrolyte battery was 1.25.

[Example 7]

A nonaqueous electrolyte battery was produced by the same procedure as in Example 1 except that the coating amount of the positive electrode slurry was adjusted such that the weight after drying per 1 $m^2$ of the active material-containing layer applied on one surface was 98 $g/m^2$. The p/n ratio of the nonaqueous electrolyte battery was 1.6.

[Example 8]

A nonaqueous electrolyte battery was produced by the same procedure as in Example 1 except for using a nonaqueous electrolyte prepared as follows.
First, as the nonaqueous solvent, propylene carbonate, ethyl methyl carbonate, and ethyl propionate were provided. Further, as the electrolyte, lithium hexafluorophosphate ($LiPF_6$) was provided. These were mixed such that the mixing ratio of propylene carbonate : ethyl methyl carbonate : ethyl propionate : $LiPF_6$ was 30% by weight : 30% by weight : 30% by weight : 10% by weight. Thus, the nonaqueous electrolyte was prepared. The content w of the ethyl propionate in the prepared nonaqueous electrolyte was 30% by weight with respect to the weight of the nonaqueous electrolyte.

[Example 9]

A nonaqueous electrolyte battery was produced by the same procedure as in Example 1 except for using a nonaqueous electrolyte prepared as follows.

First, as the nonaqueous solvent, propylene carbonate, diethyl carbonate and ethyl propionate were provided. Further, as the electrolyte, lithium hexafluorophosphate (LiPF$_6$) was provided. These were mixed such that the mixing ratio of propylene carbonate : diethyl carbonate : ethyl propionate : LiPF$_6$ was 30% by weight : 30% by weight : 30% by weight : 10% by weight. Thus, the nonaqueous electrolyte was prepared. The content w of the ethyl propionate in the prepared nonaqueous electrolyte was 30% by weight with respect to the weight of the nonaqueous electrolyte.

[Example 10]

A nonaqueous electrolyte battery was produced by the same procedure as in Example 1 except for changing the coating amount of the positive electrode slurry and for using a nonaqueous electrolyte prepared by the following procedure.

In this case, the coating amount of the positive electrode slurry was adjusted such that the weight after drying per 1 m$^2$ of the active material-containing layer applied on one surface was 75 g/m$^2$.

The nonaqueous electrolyte was prepared as follows. First, as the nonaqueous solvent, propylene carbonate, ethyl methyl carbonate, and ethyl propionate were provided. Further, as the electrolyte, lithium hexafluorophosphate (LiPF$_6$) was provided. These were mixed such that the mixing ratio of propylene carbonate : ethyl methyl carbonate : ethyl propionate : LiPF$_6$ was 30% by weight : 40% by weight : 20% by weight : 10% by weight.

The content w of the ethyl propionate in the prepared nonaqueous electrolyte was 20% by weight with respect to the weight of the nonaqueous electrolyte. Further, the p/n ratio of the nonaqueous electrolyte battery was 1.25.

[Example 11]

A nonaqueous electrolyte battery was produced by the same procedure as in Example 1 except for changing the coating amount of the positive electrode slurry and for using a nonaqueous electrolyte prepared by the following procedure.

In this example, the coating amount of the positive electrode slurry was adjusted such that the weight after drying per 1 m$^2$ of the active material-containing layer applied on one surface was 75 g/m$^2$.

The nonaqueous electrolyte was prepared as follows. First, as the nonaqueous solvent, propylene carbonate, ethyl methyl carbonate, and ethyl propionate were provided. Further, as the electrolyte, lithium hexafluorophosphate (LiPF$_6$) was provided. These were mixed such that the mixing ratio of propylene carbonate : ethyl methyl carbonate : ethyl propionate : LiPF$_6$ was 30% by weight : 20% by weight : 40% by weight : 10% by weight.

The content w of the ethyl propionate in the prepared nonaqueous electrolyte was 40% by weight with respect to the weight of the nonaqueous electrolyte. Further, the p/n ratio of the nonaqueous electrolyte battery according to this example was 1.25.

[Example 12]

A nonaqueous electrolyte battery was produced by the same procedure as in Example 1 except for changing the coating amount of the positive electrode slurry and for using a nonaqueous electrolyte prepared by the following procedure.

In this example, the coating amount of the positive electrode slurry was adjusted such that the weight after drying per 1 m$^2$ of the active material-containing layer applied on one surface was 98 g/m$^2$.

The nonaqueous electrolyte was prepared as follows. As the nonaqueous solvent, ethylene carbonate, and ethyl propionate were provided. Further, as the electrolyte, lithium hexafluorophosphate (LiPF$_6$) was provided. These were mixed such that the mixing ratio of ethylene carbonate : ethyl propionate : LiPF$_6$ was 50% by weight : 40% by weight : 10% by weight.

The content w of the ethyl propionate in the prepared nonaqueous electrolyte was 40% by weight with respect to the weight of the nonaqueous electrolyte. Further, the p/n ratio of the nonaqueous electrolyte battery according to this example was 1.6.

[Example 13]

A nonaqueous electrolyte battery was produced by the same procedure as in Example 1 except for using a positive electrode produced by the following procedure.

As the positive electrode active material, a powder of a lithium cobalt composite oxide (composition formula: LiCoO$_2$) having an average particle size of 10 $\mu$m, and a powder of a lithium nickel cobalt manganese composite oxide (composition formula: LiNi$_{0.5}$Co$_{0.35}$Mn$_{0.15}$O$_2$) having an average particle size of 8 $\mu$m were provided. As the conductive agent, acetylene black and graphite were provided. As the binder, polyvinylidene fluoride (PVdF) was provided. The lithium cobalt composite oxide, the lithium nickel cobalt manganese composite oxide, the acetylene black, the graphite, and the PVdF were mixed so as to be 45% by weight, 40% by weight, 5.0% by weight, 5.0% by weight, and 5.0% by weight, respectively. The obtained mixture was put into N-methyl pyrrolidone, and the resulting mixture was stirred to prepare a slurry. The positive electrode slurry obtained after stirring was applied onto both surfaces of an aluminum foil having a thickness of 20 $\mu$m by a coating machine. The coating amount was adjusted such that the weight after drying per 1 $m^2$ of the active material-containing layer applied on one surface was 80 $g/m^2$. At this time, a portion to which the slurry was not applied was left on the aluminum foil. The obtained coating was dried, and then the aluminum foil with the dried coating was rolled by a roll press machine such that the electrode density (excluding the current collector) was 2.8 $g/cm^3$. Next, the portion of the aluminum foil, to which the slurry was not applied, was die-cut to form a positive electrode lead.

The p/n ratio of the nonaqueous electrolyte battery according to this example was 1.4.

[Example 14]

A nonaqueous electrolyte battery was produced by the same procedure as in Example 13 except for using a positive electrode produced by the following procedure.

The lithium cobalt composite oxide, the lithium nickel cobalt manganese composite oxide, the acetylene black, the graphite, and the PVdF were mixed so as to be 10% by weight, 75% by weight, 5.0% by weight, 5.0% by weight, and 5.0% by weight, respectively. The obtained mixture was put into N-methyl pyrrolidone, and the resulting mixture was stirred to prepare a slurry. The coating amount was adjusted such that the weight after drying per 1 $m^2$ of the active material-containing layer applied on one surface was 75 $g/m^2$. The obtained coating was dried, and then the aluminum foil with the dried coating was rolled by a roll press machine such that the electrode density (excluding the current collector) was 2.7 $g/cm^3$. Next, the portion of the aluminum foil, to which the slurry was not applied, was die-cut to form a positive electrode lead.

The p/n ratio of the nonaqueous electrolyte battery according to this example was 1.4.

[Comparative Example 1]

A nonaqueous electrolyte battery was produced by the same procedure as in Example 3 except for using a positive electrode produced by the following procedure.

As the positive electrode active material, a powder of a lithium nickel cobalt manganese composite oxide (composition formula: $LiNi_{0.5}Co_{0.35}Mn_{0.15}O_2$) having an average particle size of 8 $\mu$m was provided. As the conductive agent, acetylene black and graphite were provided. As the binder, polyvinylidene fluoride (PVdF) was prepared. The lithium nickel cobalt manganese composite oxide, the acetylene black, the graphite, and the PVdF were mixed so as to be 85% by weight, 5.0% by weight, 5.0% by weight, and 5.0% by weight, respectively. The obtained mixture was put into N-methyl pyrrolidone, and the resulting mixture was stirred to prepare a slurry. The positive electrode slurry obtained after stirring was applied onto both surfaces of an aluminum foil having a thickness of 20 $\mu$m by a coating machine. The coating amount was adjusted such that the weight after drying per 1 $m^2$ of the active material-containing layer applied on one surface was 80 $g/m^2$. At this time, a portion to which the slurry was not applied was left on the aluminum foil. The obtained coating was dried, and then the aluminum foil with the dried coating was rolled by a roll press machine such that the electrode density (excluding the current collector) was 2.8 $g/cm^3$. Next, the portion of the aluminum foil, to which the slurry was not applied, was die-cut to form a positive electrode lead.

The p/n ratio of the nonaqueous electrolyte battery according to this example was 1.4.

[Comparative Example 2]

A nonaqueous electrolyte battery was produced by the same procedure as in Example 1 except for using a nonaqueous electrolyte prepared as follows.

First, as the nonaqueous solvent, propylene carbonate and ethyl propionate were provided. Further, as the electrolyte, lithium hexafluorophosphate ($LiPF_6$) was provided. These were mixed such that the mixing ratio of propylene carbonate : ethyl propionate : $LiPF_6$ was 26% by weight : 64% by weight : 10% by weight. Thus, the nonaqueous electrolyte was prepared. The content w of the ethyl propionate in the prepared nonaqueous electrolyte was 64% by weight with respect to the weight of the nonaqueous electrolyte.

[Comparative Example 3]

A nonaqueous electrolyte battery was produced by the same procedure as in Example 1 except for using a nonaqueous electrolyte prepared as follows.

First, as the nonaqueous solvent, propylene carbonate and ethyl propionate were provided. Further, as the electrolyte, lithium hexafluorophosphate ($LiPF_6$) was provided. These were mixed such that the mixing ratio of propylene carbonate : ethyl propionate : $LiPF_6$ was 75% by weight : 15% by weight : 10% by weight. Thus, the nonaqueous electrolyte was prepared. The content w of the ethyl propionate in the prepared nonaqueous electrolyte was 15% by weight with respect to the weight of the nonaqueous electrolyte.

[Comparative Example 4]

A nonaqueous electrolyte battery was produced by the same procedure as in Example 3 except for using a negative electrode produced by the following procedure.

As the negative electrode active material, a powder of natural graphite having an average particle size of 10 $\mu$m was provided. As the conductive agent, acetylene black was provided. As the binder, polyvinylidene fluoride (PVdF) was provided. The graphite powder, the acetylene black, and the PVdF were mixed so as to be 90% by weight, 5% by weight, and 5% by weight, respectively. The obtained mixture was put into N-methyl pyrrolidone, and the resulting mixture was stirred to prepare a slurry. The negative electrode slurry obtained after stirring was applied onto both surfaces of a copper foil having a thickness of 10 $\mu$m by a coating machine. The coating amount was adjusted such that the weight after drying per 1 $m^2$ of the active material-containing layer applied on one surface was 25 $g/m^2$. At this time, a portion to which the slurry was not applied was left on the copper foil. The obtained coating was dried, and then the copper foil with the dried coating was rolled by a roll press machine such that the electrode density (excluding the current collector) was 1.9 $g/cm^3$. Next, the portion of the copper foil, to which the slurry was not applied, was die-cut to form a negative electrode lead.

The p/n ratio of the nonaqueous electrolyte battery in this example was 1.4.

[Comparative Example 5]

A nonaqueous electrolyte battery was produced by the same procedure as in Example 3 except that the coating amount of the positive electrode slurry was adjusted such that the weight after drying per 1 $m^2$ of the active material-containing layer applied on one surface was 65 $g/m^2$. The p/n ratio of the nonaqueous electrolyte battery was 1.1.

[Comparative Example 6]

A nonaqueous electrolyte battery was produced by the same procedure as in Example 3 except that the coating amount of the positive electrode slurry was adjusted such that the weight after drying per 1 $m^2$ of the active material-containing layer applied on one surface was 111 $g/m^2$. The p/n ratio of the nonaqueous electrolyte battery was 1.8.

[Comparative Example 7]

A nonaqueous electrolyte battery was produced by the same procedure as in Example 1 except for using a nonaqueous electrolyte prepared as follows.

First, as the nonaqueous solvent, propylene carbonate and ethyl methyl carbonate were provided. Further, as the electrolyte, lithium hexafluorophosphate ($LiPF_6$) was provided. These were mixed such that the mixing ratio of propylene carbonate : ethyl methyl carbonate : $LiPF_6$ was 30% by weight : 60% by weight : 10% by weight. Thus, the nonaqueous electrolyte was prepared. The content w of the ethyl propionate in the prepared nonaqueous electrolyte was 0% by weight with respect to the weight of the nonaqueous electrolyte.

[Comparative Example 8]

A nonaqueous electrolyte battery was produced by the same procedure as in Example 1 except for using a nonaqueous electrolyte prepared as follows.

First, as the nonaqueous solvent, propylene carbonate and ethyl acetate were provided. Further, as the electrolyte, lithium hexafluorophosphate ($LiPF_6$) was provided. These were mixed such that the mixing ratio of propylene carbonate : ethyl acetate : $LiPF_6$ was 30% by weight : 60% by weight : 10% by weight. Thus, the nonaqueous electrolyte was prepared. The content w of the ethyl propionate in the prepared nonaqueous electrolyte was 0% by weight with respect to the weight of the nonaqueous electrolyte.

[Comparative Example 9]

A nonaqueous electrolyte battery was produced by the same procedure as in Example 1 except for using a nonaqueous electrolyte prepared as follows.

First, as the nonaqueous solvent, ethylene carbonate and ethyl propionate were provided. Further, as the electrolyte, lithium hexafluorophosphate (LiPF$_6$) was provided. These were mixed such that the mixing ratio of ethylene carbonate : ethyl propionate : LiPF$_6$ was 30% by weight : 60% by weight : 10% by weight. Thus, the nonaqueous electrolyte was prepared. The content w of the ethyl propionate in the prepared nonaqueous electrolyte was 60% by weight with respect to the weight of the nonaqueous electrolyte.

[Comparative Example 10]

A nonaqueous electrolyte battery was produced by the same procedure as in Example 1 except for changing the coating amount of the positive electrode slurry and for using a nonaqueous electrolyte prepared by the following procedure.

In this example, the coating amount of the positive electrode slurry was adjusted such that the weight after drying per 1 m$^2$ of the active material-containing layer applied on one surface was 98 g/m$^2$.

The nonaqueous electrolyte was prepared as follows. As the nonaqueous solvent, propylene carbonate, ethyl methyl carbonate, and ethyl propionate were provided. Further, as the electrolyte, lithium hexafluorophosphate (LiPF$_6$) was provided. These were mixed such that the mixing ratio of propylene carbonate : ethyl methyl carbonate : ethyl propionate : LiPF$_6$ was 30% by weight : 40% by weight : 20% by weight : 10% by weight.

The content w of the ethyl propionate in the prepared nonaqueous electrolyte was 20% by weight with respect to the weight of the nonaqueous electrolyte. Further, the p/n ratio of the nonaqueous electrolyte battery according to this example was 1.6.

[Comparative Example 11]

A nonaqueous electrolyte battery was produced by the same procedure as in Example 13 except for using a nonaqueous electrolyte produced as follows.

First, as the nonaqueous solvent, propylene carbonate, and ethyl propionate were provided. Further, as the electrolyte, lithium hexafluorophosphate (LiPF$_6$) was provided. These were mixed such that the mixing ratio of propylene carbonate : ethyl propionate : LiPF$_6$ was 30% by weight : 60% by weight : 10% by weight. Thus, the nonaqueous electrolyte was prepared. The content w of the ethyl propionate in the prepared nonaqueous electrolyte was 60% by weight with respect to the weight of the nonaqueous electrolyte.

[Comparative Example 12]

A nonaqueous electrolyte battery was produced by the following procedure.

[Production of Positive Electrode]

As the positive electrode active material, a powder of a lithium nickel cobalt manganese composite oxide (composition formula: LiNi$_{1/3}$Mn$_{1/3}$Co$_{1/3}$O$_2$) having an average particle size of 8 $\mu$m was prepared. As the conductive agent, acetylene black was provided. As the binder, polyvinylidene fluoride (PVdF) was provided. The lithium nickel cobalt manganese composite oxide, the acetylene black, and the PVdF were mixed so as to be 90% by weight, 5% by weight, and 5% by weight, respectively. The obtained mixture was put into N-methyl pyrrolidone as a solvent, and the resulting mixture was stirred to prepare a slurry. The positive electrode slurry obtained after stirring was applied onto both surfaces of an aluminum foil having a thickness of 20 $\mu$m by a coating machine. The coating amount was adjusted such that the weight after drying per 1 m$^2$ of the active material-containing layer applied on one surface was 80 g/m$^2$. At this time, a portion to which the slurry was not applied was left on the aluminum foil. The obtained coating was dried, and then the aluminum foil with the dried coating was rolled by a roll press machine such that the electrode density (excluding the current collector) was 2.7 g/cm$^3$. Next, the portion of the aluminum foil, to which the slurry was not applied, was die-cut to form a positive electrode lead. Thus, positive electrodes were produced.

[Production of Negative Electrode]

As the negative electrode active material, a powder of a spinel-type lithium titanium composite oxide (composition formula: Li$_4$Ti$_5$O$_{12}$) was provided. As the conductive agent, acetylene black was provided. As the binder, polyvinylidene fluoride (PVdF) was provided. The lithium titanium composite oxide, the acetylene black, and the PVdF were mixed so as to be 85% by weight, 5% by weight, and 10% by weight, respectively. The obtained mixture was put into N-methyl pyrrolidone, and the resulting mixture was stirred to prepare a slurry. The negative electrode slurry obtained after stirring was applied onto both surfaces of a copper foil having a thickness of 10 μm by a coating machine. The coating amount was adjusted such that the weight after drying per 1 m² of the active material-containing layer applied on one surface was 50 g/m². At this time, a portion to which the slurry was not applied was left on the copper foil. The obtained coating was dried, and then the copper foil with the dried coating was rolled by a roll press machine such that the electrode density (excluding the current collector) was 2.0 g/cm³. Next, the portion of the copper foil, to which the slurry was not applied, was die-cut to form a negative electrode lead. Thus, negative electrodes were produced.

[Production of Cell Before Injection]

A cell before injection was produced by the same procedure as in Example 1 except for using a positive electrode and the negative electrode, which were produced as described above.

[Preparation of Nonaqueous Electrolyte]

A nonaqueous electrolyte was prepared by the following procedure.

First, propylene carbonate and ethyl acetate were mixed at a volume ratio of 1 : 3 to obtain a mixed solvent as a nonaqueous solvent. In this mixed solvent, lithium hexafluorophosphate ($LiPF_6$) was dissolved in an amount corresponding to 1 mol/dm³ (= 1 mol/L). Thus, the nonaqueous electrolyte was prepared. The weight ratio of propylene carbonate : ethyl acetate : $LiPF_6$ in the prepared nonaqueous electrolyte was approximately 28 : 60 : 12. Further, the content w of the ethyl propionate in the prepared nonaqueous electrolyte was 0% by weight with respect to the weight of the nonaqueous electrolyte.

[Production of Nonaqueous Electrolyte Battery]

The nonaqueous electrolyte prepared as described above was injected into a container of the cell before injection housing the electrode group to produce a nonaqueous electrolyte battery.

The value of the capacity ratio p/n of the nonaqueous electrolyte battery in this example was 1.4.

The following Tables 1 and 2 show the positive electrode active material, the negative electrode active material, the value of ratio p/n, the composition of nonaqueous electrolyte, the content w of propionate ester, and the value of ratio w/ (p/n) for Examples 1 to 14, and Comparative Examples 1 to 12, respectively.

[Table 1]

|  | Positive Electrode Active Material | Negative Electrode Active Material | p/n | Composition of Nonaqueous Electrolyte (Weight Ratio) | Content w of Propionate Ester (wt.%) | w/ (p/n) |
|---|---|---|---|---|---|---|
| Example 1 | LCO | LTO | 1.4 | PC/EP/$LiPF_6$=50/40/10 | 40 | 29 |
| Example 2 | LCO | LTO | 1.4 | PC/EP/$LiPF_6$=45/45/10 | 45 | 32 |
| Example 3 | LCO | LTO | 1.4 | PC/EP/$LiPF_6$=40/50/10 | 50 | 36 |
| Example 4 | LCO | LTO | 1.4 | PC/MP/$LiPF_6$=50/40/10 | 40 | 29 |
| Example 5 | LCO | LTO | 1.4 | PC/PP/$LiPF_6$=50/40/10 | 40 | 29 |
| Example 6 | LCO | LTO | 1.25 | PC/EP/$LiPF_6$=50/40/10 | 40 | 32 |
| Example 7 | LCO | LTO | 1.6 | PC/EP/$LiPF_6$=50/40/10 | 40 | 25 |

(continued)

|  | Positive Electrode Active Material | Negative Electrode Active Material | p/n | Composition of Nonaqueous Electrolyte (Weight Ratio) | Content w of Propionate Ester (wt.%) | w/ (p/n) |
|---|---|---|---|---|---|---|
| Example 8 | LCO | LTO | 1.4 | PC/EMC/EP/LiPF$_6$=30/30/30/10 | 30 | 21 |
| Example 9 | LCO | LTO | 1.4 | PC/DEC/EP/LiPF$_6$=30/30/30/10 | 30 | 21 |
| Example 10 | LCO | LTO | 1.25 | PC/EMC/EP/LiPF$_6$=30/40/20/10 | 20 | 16 |
| Example 11 | LCO | LTO | 1.25 | PC/EMC/EP/LiPF$_6$=30/20/40/10 | 40 | 32 |
| Example 12 | LCO | LTO | 1.6 | EC/EP/LiPF$_6$=50/40/10 | 40 | 25 |
| Example 13 | LCO+NCM (53:47) | LTO | 1.4 | PC/EP/LiPF$_6$=50/40/10 | 40 | 29 |
| Example 14 | LCO+NCM (12:88) | LTO | 1.4 | PC/EP/LiPF$_6$=50/40/10 | 40 | 29 |

[Table 2]

|  | Positive Electrode Active Material | Negative Electrode Active Material | p/n | Composition of Nonaqueous Electrolyte (Weight Ratio) | Content w of Propionate Ester (wt.%) | w/ (p/n) |
|---|---|---|---|---|---|---|
| Comparative Example 1 | NCM | LTO | 1.4 | PC/EP/LiPF$_6$=40/50/10 | 50 | 36 |
| Comparative Example 2 | LCO | LTO | 1.4 | PC/EP/LiPF$_6$=26/64/10 | 64 | 46 |
| Comparative Example 3 | LCO | LTO | 1.4 | PC/EP/LiPF$_6$=75/15/10 | 15 | 11 |
| Comparative Example 4 | LCO | C | 1.4 | PC/EP/LiPF$_6$=40/50/10 | 50 | 36 |
| Comparative Example 5 | LCO | LTO | 1.1 | PC/EP/LiPF$_6$=40/50/10 | 50 | 45 |
| Comparative Example 6 | LCO | LTO | 1.8 | PC/EP/LiPF$_6$=40/50/10 | 50 | 28 |
| Comparative Example 7 | LCO | LTO | 1.4 | PC/EMC/LiPF$_6$=30/60/10 | 0 | 0 |
| Comparative Example 8 | LCO | LTO | 1.4 | PC/EA/LiPF$_6$=30/60/10 | 0 | 0 |
| Comparative Example 9 | LCO | LTO | 1.4 | EC/EP/LiPF$_6$=30/60/10 | 60 | 43 |
| Comparative Example 10 | LCO | LTO | 1.6 | PC/EMC/EP/LiPF$_6$=30/40/20/10 | 20 | 13 |
| Comparative Example 11 | LCO+NCM | LTO | 1.4 | PC/EP/LiPF$_6$=30/60/10 | 60 | 43 |

(continued)

| | Positive Electrode Active Material | Negative Electrode Active Material | p/n | Composition of Nonaqueous Electrolyte (Weight Ratio) | Content w of Propionate Ester (wt.%) | w/ (p/n) |
|---|---|---|---|---|---|---|
| Comparative Example 12 | NCM111 | LTO | 1.4 | $PC/EA/LiPF_6$= around 28/60/12 (Volume ratio of PC/EA : 1/3) (Dissolution amount of $LiPF_6$: $1.0 mol/dm^3$) | 0 | 0 |

Should be noted that each abbreviation in Tables 1 and 2 shows as follows.

LCO: lithium cobalt composite oxide (composition formula: $LiCoO_2$); LTO: spinel-type lithium titanium composite oxide (composition formula: $Li_4Ti_5O_{12}$); NCM: lithium nickel cobalt manganese composite oxide (composition formula: $LiNi_{0.5}Co_{0.35}Mn_{0.15}O_2$); NCM111: lithium nickel cobalt manganese composite oxide (composition formula: $LiNi_{1/3}Mn_{1/3}Co_{1/3}O_2$); PC: propylene carbonate; EP: ethyl propionate; MP: methyl propionate; EMC: ethyl methyl carbonate; DEC: diethyl carbonate; EC: ethylene carbonate; and EA: ethyl acetate.

[Evaluation]

The nonaqueous electrolyte batteries of Examples 2 to 14 and Comparative Examples 1 to 12 were subjected to an evaluation test in the same procedure as that performed for Example 1. The results are shown in the following Table 3.

[Table 3]

| | Capacity retention ratio (%) | Battery Swelling Ratio (Times) |
|---|---|---|
| Example 1 | 89 | 1.2 |
| Example 2 | 84 | 1.4 |
| Example 3 | 82 | 1.5 |
| Example 4 | 86 | 1.4 |
| Example 5 | 85 | 1.4 |
| Example 6 | 89 | 1.5 |
| Example 7 | 86 | 1.2 |
| Example 8 | 90 | 1.3 |
| Example 9 | 93 | 1.2 |
| Example 10 | 88 | 1.3 |
| Example 11 | 84 | 1.4 |
| Example 12 | 82 | 1.5 |
| Example 13 | 94 | 1.2 |
| Example 14 | 90 | 1.5 |
| Comparative Example 1 | 75 | 2.0 |
| Comparative Example 2 | 73 | 2.2 |
| Comparative Example 3 | 67 | 1.7 |
| Comparative Example 4 | 30 | 1.8 |
| Comparative Example 5 | 77 | 2.5 |
| Comparative Example 6 | 48 | 1.8 |
| Comparative Example 7 | 66 | 2.5 |
| Comparative Example 8 | 59 | 2.9 |

(continued)

|  | Capacity retention ratio (%) | Battery Swelling Ratio (Times) |
|---|---|---|
| Comparative Example 9 | 70 | 1.9 |
| Comparative Example 10 | 80 | 1.7 |
| Comparative Example 11 | 75 | 2.0 |
| Comparative Example 12 | 71 | 2.4 |

From the results shown in Table 3, it can be found that each of the nonaqueous electrolyte batteries of Examples 1 to 14 was able to exhibit a capacity retention ratio superior to that of each of the nonaqueous electrolyte batteries of Comparative Examples 1 to 12, and at the same time, was able to suppress the gas generation.

In contrast, in the nonaqueous electrolyte battery of Comparative Example 1, the positive electrode did not include a lithium cobalt composite oxide. Therefore, it can be considered that in the battery of Comparative Example 1, there was no interaction between the decomposition product of propionate ester and the positive electrode, and the gas generation was not able to be sufficiently suppressed. Further, it can be considered that in the battery of Comparative Example 1, the decomposition product of propionate ester promoted the deterioration of the positive electrode, and as a result, a poor capacity retention ratio was exhibited.

In the nonaqueous electrolyte battery of Comparative Example 2, the content w of propionate ester was 64% by weight, and the ratio w/(p/n) was 46. Therefore, it can be considered that in the battery of Comparative Example 2, the gas generation was not able to be sufficiently suppressed. Further, it can be considered that in the battery of Comparative Example 2, dissociation of Li ions from the electrolyte in the nonaqueous electrolyte was not promoted, and as a result, the resistance was increased. As a result, it can be considered that in the battery of Comparative Example 2, the load due to the repetition of charging and discharging was increased, and as a result, a poor capacity retention ratio was exhibited.

In the nonaqueous electrolyte battery of Comparative Example 3, the content w of propionate ester was 15% by weight, and the ratio w/(p/n) was 11. Further, in each of the nonaqueous electrolyte batteries of Comparative Examples 7, 8, and 12, the nonaqueous electrolyte did not contain a propionate ester. It can be considered that in these batteries of Comparative Examples, the gas generation was not able to be sufficiently suppressed. It can also be considered that the results led to the poor capacity retention ratio and the increase in the gas generation amount, in the batteries of Comparative Examples 3, 7, 8 and 12.

In the nonaqueous electrolyte battery of Comparative Example 4, the negative electrode active material was not a lithium titanium composite oxide, but was carbon. Further, the value of the ratio p/n was 1.4. Therefore, it can be considered that in the nonaqueous electrolyte battery of Comparative Example 4, the capacity of the negative electrode which contains an active material containing carbon was smaller than the capacity of the positive electrode, and the negative electrode was deteriorated by the charging and discharging. It can also be considered that the results led to the poor capacity retention ratio and the increase in the gas generation amount, in the battery of Comparative Example 4.

In Comparative Examples 5, 9, and 11, the value of the ratio w/(p+n) exceeded 40. In these nonaqueous electrolyte batteries of Comparative Examples, it can be considered that the ratio p/n was extremely small for the amount of propionate ester. Therefore, it can be considered that in these batteries of Comparative Examples, the oxidative decomposition of propionate ester was excessively caused, and the amount of gas generation was increased. Further, it can also be considered that in these batteries of Comparative Examples, the deterioration of each of the batteries was promoted due to the increase in the gas generation amount.

In the nonaqueous electrolyte battery of Comparative Example 6, the value of the ratio p/n was 1.8. It can be considered that in the battery of Comparative Example 6, the positive electrode capacity p was excessive with respect to the negative electrode capacity n. Therefore, it can be considered that in the battery of Comparative Example 8, the load due to the repetition of charging and discharging was large, and as a result, a poor capacity retention ratio was exhibited. Further, in the battery of Comparative Example 8, acetic ester was contained in the electrolyte solution. As a result, it can be considered that the lithium cobalt composite oxide further decomposed the decomposition product of acetic ester into gas components, and therefore, the gas generation was not able to be sufficiently suppressed.

In Comparative Example 10, the value of the ratio w/(p+n) was 13. It can be considered that in the battery of Comparative Example 10, the gas generation was not able to be sufficiently suppressed. It can also be considered that the results led to the poor capacity retention ratio and the increase in the gas generation amount, in the battery of Comparative Example 10.

[Example 15]

A nonaqueous electrolyte battery was produced by the same procedure as in Example 13 except for the following points.

When a positive electrode slurry was prepared, the lithium cobalt composite oxide, the lithium nickel cobalt manganese composite oxide, the acetylene black, the graphite, and the PVdF were mixed so as to be 3% by weight, 82% by weight, 5.0% by weight, 5.0% by weight, and 5.0% by weight, respectively.

Further, the coating amount of the positive electrode slurry was adjusted such that the weight after drying per $1 \, m^2$ of the active material-containing layer applied on one surface was 70 $g/m^2$.

[Example 16]

A nonaqueous electrolyte battery was produced by the same procedure as in Example 13 except for the following points.

When a positive electrode slurry was prepared, as the lithium nickel cobalt manganese composite oxide, a powder of a lithium nickel cobalt manganese composite oxide (composition formula: $LiNi_{0.5}Co_{0.2}Mn_{0.3}O_2$) having an average particle size of 8 $\mu$m was provided. Further, the lithium cobalt composite oxide, the lithium nickel cobalt manganese composite oxide, the acetylene black, the graphite, and the PVdF were mixed so as to be 45% by weight, 40% by weight, 5.0% by weight, 5.0% by weight, and 5.0% by weight, respectively.

[Example 17]

A nonaqueous electrolyte battery was produced by the same procedure as in Example 13 except for the following points.

When a positive electrode slurry was prepared, as the lithium nickel cobalt manganese composite oxide, a powder of a lithium nickel cobalt manganese oxide (composition formula: $LiNi_{0.7}Co_{0.15}Mn_{0.15}O_2$) having an average particle size of 8 $\mu$m was provided. Further, the lithium cobalt composite oxide, the lithium nickel cobalt manganese composite oxide, the acetylene black, the graphite, and the PVdF were mixed so as to be 45% by weight, 40% by weight, 5.0% by weight, 5.0% by weight, and 5.0% by weight, respectively.

[Example 18]

A nonaqueous electrolyte battery was produced by the same procedure as in Example 13 except for the following points.

When a positive electrode slurry was prepared, as the lithium nickel cobalt manganese composite oxide, a powder of a lithium nickel cobalt manganese oxide (composition formula: $LiNi_{0.5}Co_{0.34}Mn_{0.15}Al_{0.01}O_2$) having an average particle size of 8 $\mu$m was provided. Further, the lithium cobalt composite oxide, the lithium nickel cobalt manganese composite oxide, the acetylene black, the graphite, and the PVdF were mixed so as to be 45% by weight, 40% by weight, 5.0% by weight, 5.0% by weight, and 5.0% by weight, respectively.

[Examples 19 to 23]

Each nonaqueous electrolyte battery was produced by the same procedure as in Example 1 except for using a nonaqueous electrolyte prepared so as to have the composition ratio shown in the following Table 4.

[Example 24]

A nonaqueous electrolyte battery was produced by the same procedure as in Example 1 except that the coating amount of the positive electrode slurry was adjusted such that the weight after drying per $1 \, m^2$ of the active material-containing layer applied on one surface was 78 $g/m^2$. The p/n ratio of the nonaqueous electrolyte battery was 1.3.

[Example 25]

A nonaqueous electrolyte battery was produced by the same procedure as in Example 1 except that the coating amount of the positive electrode slurry was adjusted such that the weight after drying per $1 \, m^2$ of the active material-containing layer applied on one surface was 88 $g/m^2$. The p/n ratio of the nonaqueous electrolyte battery was 1.47.

[Example 26]

A nonaqueous electrolyte battery was produced by the same procedure as in Example 7 except for using a nonaqueous electrolyte prepared by the following procedure.

The nonaqueous solvent and the electrolyte, which were the same as those provided in Example 7, were provided. Next, by using the provided nonaqueous solvent and electrolyte, a nonaqueous electrolyte was prepared so as to have the composition ratio shown in the following Table 4.

[Example 27]

A nonaqueous electrolyte battery was produced by the same procedure as in Example 10 except that the coating amount of the positive electrode slurry was adjusted such that the weight after drying per 1 $m^2$ of the active material-containing layer applied on one surface was 88 $g/m^2$. The p/n ratio of the nonaqueous electrolyte battery was 1.47.

[Example 28]

A nonaqueous electrolyte battery was produced by the same procedure as in Example 1 except for using the same nonaqueous electrolyte as the nonaqueous electrolyte used in Example 10.

The following Table 4 shows the positive electrode active material, the negative electrode active material, the value of ratio p/n, the composition of nonaqueous electrolyte, the content w of propionate ester, and the value of ratio w/(p/n), for Examples 15 to 28.

[Table 4]

| | Positive Electrode Active Material | Negative Electrode Active Material | p/n | Composition of Nonaqueous Electrolyte (Weight Ratio) | Content w of Propionate Ester (wt.%) | w/ (p/n) |
|---|---|---|---|---|---|---|
| Example 15 | LCO+NCM (3.5:96.5) | LTO | 1.4 | PC/EP/LiPF$_6$=50/40/10 | 40 | 29 |
| Example 16 | LCO+NCM (53:47) | LTO | 1.4 | PC/EP/LiPF$_6$=50/40/10 | 40 | 29 |
| Example 17 | LCO+NCM (53:47) | LTO | 1.4 | PC/EP/LiPF$_6$=50/40/10 | 40 | 29 |
| Example 18 | LCO+NCM (53:47) | LTO | 1.4 | PC/EP/LiPF$_6$=50/40/10 | 40 | 29 |
| Example 19 | LCO | LTO | 1.4 | PC/EC/EP/ LiPF$_6$=5/45/40/10 | 40 | 29 |
| Example 20 | LCO | LTO | 1.4 | PC/EC/EP/ LiPF$_6$=20/30/40/10 | 40 | 29 |
| Example 21 | LCO | LTO | 1.4 | PC/EC/EP/ LiPF$_6$=25/25/40/10 | 40 | 29 |
| Example 22 | LCO | LTO | 1.4 | PC/EP/LiPF$_6$=55/35/10 | 35 | 25 |
| Example 23 | LCO | LTO | 1.4 | PC/EP/LiPF$_6$=60/30/10 | 30 | 21 |
| Example 24 | LCO | LTO | 1.3 | PC/EP/LiPF$_6$=50/40/10 | 40 | 31 |
| Example 25 | LCO | LTO | 1.47 | PC/EP/LiPF$_6$=50/40/10 | 40 | 27 |
| Example 26 | LCO | LTO | 1.6 | PC/EP/LiPF$_6$=27/63/10 | 63 | 39 |

(continued)

| | Positive Electrode Active Material | Negative Electrode Active Material | p/n | Composition of Nonaqueous Electrolyte (Weight Ratio) | Content w of Propionate Ester (wt.%) | w/ (p/n) |
|---|---|---|---|---|---|---|
| Example 27 | LCO | LTO | 1.47 | PC/EMC/EP/ $LiPF_6$=30/40/20/10 | 20 | 13.6 |
| Example 28 | LCO | LTO | 1.4 | PC/EMC/EP/ $LiPF_6$=30/40/20/10 | 20 | 14 |

Should be noted that the "NCM" described in each of the columns of positive electrode active material in Table 4 show a "lithium nickel cobalt manganese composite oxide (composition formula: $LiNi_{0.5}Co_{0.35}Mn_{0.15}O_2$)" for Example 15, show a "lithium nickel cobalt manganese composite oxide (composition formula: $LiNi_{0.5}Co_{0.2}Mn_{0.3}O_2$)" for Example 16, show a "lithium nickel cobalt manganese oxide (composition formula: $LiNi_{0.7}Co_{0.15}Mn_{0.15}O_2$)" for Example 17, and shows a "lithium nickel cobalt manganese oxide (composition formula: $LiNi_{0.5}Co_{0.34}Mn_{0.15}Al_{0.01}O_2$)" for Example 18. Other abbreviations are the same as the abbreviations used in Tables 1 and 2, respectively.

[Evaluation]

Each of the nonaqueous electrolyte batteries of Examples 15 to 28 was subjected to an evaluation test in the same procedure as that performed for Example 1. The results are shown in the following Table 5.

[Table 5]

| | Capacity Retention Ratio (%) | Battery Swelling Ratio (Times) |
|---|---|---|
| Example 15 | 93 | 1.3 |
| Example 16 | 86 | 1.4 |
| Example 17 | 95 | 1.4 |
| Example 18 | 84 | 1.5 |
| Example 19 | 84 | 1.5 |
| Example 20 | 90 | 1.3 |
| Example 21 | 87 | 1.4 |
| Example 22 | 85 | 1.4 |
| Example 23 | 93 | 1.4 |
| Example 24 | 92 | 1.2 |
| Example 25 | 84 | 1.2 |
| Example 26 | 82 | 1.3 |
| Example 27 | 84 | 1.4 |
| Example 28 | 93 | 1.3 |

From the results shown in Tables 3 and 5, it can be found that similar to the nonaqueous electrolyte batteries of Examples 1 to 14, each of the nonaqueous electrolyte batteries of Examples 15 to 28 was able to exhibit a capacity retention ratio superior to that of each of the nonaqueous electrolyte batteries of Comparative Examples 1 to 12, and at the same time, was able to suppress the gas generation.

Further, from the results shown in Tables 1, 3, 4, and 5, it can be found that similar to the nonaqueous electrolyte battery of Example 1, in which the positive electrode contained only a lithium cobalt composite oxide as the positive electrode active material, each of the nonaqueous electrolyte batteries of Examples 13 to 18, in each of which the positive electrode contained a lithium cobalt composite oxide and a positive electrode active material other than the lithium cobalt composite oxide, was able to exhibit an excellent capacity retention ratio, and at the same time, was able to suppress the gas generation. In contrast, as described previously, the nonaqueous electrolyte battery of Comparative Example 1, in which the positive electrode did not contain a lithium cobalt composite oxide, exhibited a poor capacity retention ratio, and was not able to suppress the gas generation.

From the results shown in Tables 1 and 3, it can be found that the nonaqueous electrolyte battery of Example 7, in which the nonaqueous electrolyte contained propylene carbonate, was able to exhibit a more excellent capacity retention ratio than that of the nonaqueous electrolyte battery of Example 12, which was different from Example 7 in that the nonaqueous electrolyte contained ethylene carbonate in place of the propylene carbonate, and at the same time, the nonaqueous electrolyte battery of Example 7 was able to suppress the gas generation. Further, from the results shown in Tables 4 and 5, it can be found that in Examples 19 to 23 that were different from each other in the content of propylene carbonate, similarly, an excellent capacity retention ratio was able to be exhibited.

[Measurement of OCV]

The open circuit voltage (OCV) [V] of each nonaqueous electrolyte battery was measured in accordance with the following procedure. In the following description of the procedure, each nonaqueous electrolyte battery is referred to as a "battery".

First, the battery was discharged at 1 C rate under the environment of 25°C until the battery voltage reached 1.5 V. Next, the battery was left for 10 minutes. Subsequently, the battery was charged at a constant current of 1 C rate until the battery voltage reached 2.6 V. Next, the battery was charged at a constant voltage of 2.6 V. The charging was stopped at the time point when the measured current value reached lower than 0.1 C. The total charge capacity $C_{total}$ [Ah] from the start of constant-current charge to the stop of constant-voltage charge was recorded. After stopping the constant-voltage charge, the battery was left for 10 minutes. Next, the battery was discharged at a constant current of 1 C rate until 50% of the total charge capacity $C_{total}$ recorded previously was discharged. After stopping the discharging, the battery was left for 3 hours. Subsequently, the voltage of the battery between the terminals of the positive electrode and the negative electrode was measured. The measured voltage between the terminals was taken as the open circuit voltage (OCV) [V] of the battery. The value of OCV of each nonaqueous electrolyte battery is shown in the following Table 6.

[Table 6]

| | OCV (V) |
|---|---|
| Example 1 | 2.30 |
| Example 2 | 2.30 |
| Example 3 | 2.30 |
| Example 4 | 2.30 |
| Example 5 | 2.30 |
| Example 6 | 2.35 |
| Example 7 | 2.25 |
| Example 8 | 2.25 |
| Example 9 | 2.30 |
| Example 10 | 2.35 |
| Example 11 | 2.35 |
| Example 12 | 2.25 |
| Example 13 | 2.22 |
| Example 14 | 2.17 |
| Example 15 | 2.15 |
| Example 16 | 2.19 |
| Example 17 | 2.20 |
| Example 18 | 2.18 |
| Example 19 | 2.30 |

(continued)

| | OCV (V) |
|---|---|
| Example 20 | 2.30 |
| Example 21 | 2.30 |
| Example 22 | 2.30 |
| Example 23 | 2.30 |
| Example 24 | 2.33 |
| Example 25 | 2.28 |
| Example 26 | 2.25 |
| Example 27 | 2.28 |
| Example 28 | 2.30 |
| Comparative Example 1 | 2.30 |
| Comparative Example 2 | 2.30 |
| Comparative Example 3 | 2.30 |
| Comparative Example 4 | 3.40 |
| Comparative Example 5 | 2.42 |
| Comparative Example 6 | 2.12 |
| Comparative Example 7 | 2.30 |
| Comparative Example 8 | 2.30 |
| Comparative Example 9 | 2.30 |
| Comparative Example 10 | 2.15 |
| Comparative Example 11 | 2.30 |
| Comparative Example 12 | 2.30 |

From the results shown in Table 6, it can be found that each of the nonaqueous electrolyte batteries of Examples 1 to 28, was able to exhibit an OCV lower than that of Comparative Example 5 in which the capacity ratio p/n was 1.1. Further, from the results shown in Table 6, and the results shown in Tables 3 and 5, it can be found that in each of the nonaqueous electrolyte batteries of Examples 1 to 28 was able to exhibit an excellent capacity retention ratio, and at the same time, was able to suppress the gas generation, even while an OCV lower than that of Comparative Example 5 was exhibited.

According to at least one embodiment and Examples, which have been described above, a nonaqueous electrolyte battery is provided. The nonaqueous electrolyte battery includes a positive electrode, a negative electrode, and a nonaqueous electrolyte. The positive electrode contains a lithium cobalt composite oxide. The negative electrode contains a lithium titanium composite oxide. The positive electrode and the negative electrode satisfy a formula (1): $1.25 \leq p/n \leq 1.6$ in the capacity ratio p/n. The nonaqueous electrolyte contains at least one propionate ester. The content w of at least one propionate ester in the nonaqueous electrolyte is 20% by weight or more and less than 64% by weight with respect to the weight of the nonaqueous electrolyte. The nonaqueous electrolyte battery satisfies a formula (2): $13 < w/(p/n) \leq 40$. This nonaqueous electrolyte battery can suppress the gas generation during charging and discharging due to the interaction between the decomposition product of at least one propionate ester and the lithium cobalt composite oxide. As a result, this nonaqueous electrolyte battery can exhibit excellent life performance.

While certain embodiments of the present invention have been described, these embodiments have been presented by way of example only, and are not intended to limit the scope of the invention as defined in the claims The novel embodiments may be embodied in a variety of other forms, and various omissions, substitutions and changes may be made without departing from the scope of the claims.

**EP 3 605 701 B1**

## Claims

1. A nonaqueous electrolyte battery comprising:

   a positive electrode comprising a lithium cobalt composite oxide;
   a negative electrode comprising a lithium titanium composite oxide; and
   a nonaqueous electrolyte,
   wherein the positive electrode and the negative electrode satisfy a formula (1): $1.25 \leq p/n \leq 1.6$, where p is a capacity [mAh/cm$^2$] of the positive electrode, and n is a capacity [mAh/cm$^2$] of the negative electrode, p and n being measured by the method defined in the description,
   the nonaqueous electrolyte comprises at least one propionate ester, a content w of the at least one propionate ester in the nonaqueous electrolyte is 20% by weight or more and less than 64% by weight with respect to the nonaqueous electrolyte, and
   the nonaqueous electrolyte battery satisfies a formula (2): $13 < w/(p/n) \leq 40$.

2. The nonaqueous electrolyte battery according to claim 1, wherein the at least one propionate ester comprises at least one selected from the group consisting of methyl propionate and ethyl propionate.

3. The nonaqueous electrolyte battery according to claim 1 or 2, wherein the positive electrode further comprises a nickel cobalt manganese composite oxide having a composition represented by a general formula of $Li_{1-x}Ni_{1-a-b-c}Co_aMn_bM1_cO_2$, and
   in the general formula, M1 is at least one selected from the group consisting of Mg, Al, Si, Ti, Zn, Zr, Ca, W, Nb and Sn, and respective subscripts fall within ranges of $-0.2 \leq x \leq 0.5$, $0 < a < 0.4$, $0 < b < 0.5$, and $0 \leq c < 0.1$.

4. The nonaqueous electrolyte battery according to claim 3, wherein the subscript a falls within a range of $0.25 < a < 0.4$.

5. The nonaqueous electrolyte battery according to claim 1 or 2, wherein the positive electrode comprises a positive electrode active material, and the positive electrode active material comprises the lithium cobalt composite oxide, and a weight of the lithium cobalt composite oxide is from 5% by weight to 100% by weight with respect to a weight of the positive electrode active material.

6. The nonaqueous electrolyte battery according to claim 5, wherein the weight of the lithium cobalt composite oxide is from 10% by weight to 100% by weight with respect to the weight of the positive electrode active material.

7. The nonaqueous electrolyte battery according to any one of claims 1 to 6, wherein the nonaqueous electrolyte comprises propylene carbonate.

8. The nonaqueous electrolyte battery according to claim 7, wherein a content of the propylene carbonate in the nonaqueous electrolyte is 20% by weight or more and less than 60% by weight with respect to a weight of the nonaqueous electrolyte.

9. The nonaqueous electrolyte battery according to claim 8, wherein the content of the propylene carbonate in the nonaqueous electrolyte is 20% by weight or more and less than 40% by weight with respect to the weight of the nonaqueous electrolyte.

10. The nonaqueous electrolyte battery according to any one of claims 1 to 9, wherein the lithium cobalt composite oxide comprises lithium cobaltate having a composition represented by a general formula of $Li_{x1}CoO_2$ where $0 < x1 \leq 1$.

11. The nonaqueous electrolyte battery according to any one of claims 1 to 10, wherein the lithium titanium composite oxide comprises lithium titanate having a spinel-type crystal structure and having a general formula of $Li_{4+y}Ti_5O_{12}$ where $0 \leq y \leq 3$.

12. The nonaqueous electrolyte battery according to any one of claims 1 to 11, wherein the positive electrode and the negative electrode satisfy $1.3 \leq p/n < 1.5$.

13. The nonaqueous electrolyte battery according to any one of claims 1 to 12, wherein the positive electrode and the negative electrode satisfy $1.3 \leq p/n < 1.45$.

**14.** A battery pack comprising the nonaqueous electrolyte battery according to any one of claims 1 to 13.

**15.** A battery system comprising:

a first battery unit comprising the nonaqueous electrolyte battery according to any one of claims 1 to 13; and
a second battery unit electrically connected in parallel to the first battery unit and comprising a lead-acid storage battery.

**Patentansprüche**

**1.** Batterie mit nichtwässrigem Elektrolyt, umfassend:

eine positive Elektrode, umfassend ein Lithium-Cobalt-Kompositoxid;
eine negative Elektrode, umfassend ein Lithium-Titan-Kompositoxid; und
einen nichtwässrigen Elektrolyt,
wobei die positive Elektrode und die negative Elektrode Formel (1) erfüllen: $1{,}25 \leq p/n \leq 1{,}6$, worin p eine Kapazität [mAh/cm$^2$] der positiven Elektrode ist und n eine Kapazität [mAh/cm$^2$] der negativen Elektrode ist, wobei p und n über die in der Beschreibung definierte Methode bestimmt werden,
der nichtwässrige Elektrolyt mindestens einen Propionatester umfasst, ein Gehalt w des mindestens einen Propionatesters in dem nichtwässrigen Elektrolyt 20 Gew.-% oder mehr und weniger als 64 Gew.-%, bezogen auf den nichtwässrigen Elektrolyt, beträgt, und
die Batterie mit nichtwässrigem Elektrolyt Formel (2) erfüllt: $13 < w/(p/n) \leq 40$.

**2.** Batterie mit nichtwässrigem Elektrolyt gemäß Anspruch 1, wobei der mindestens eine Propionatester mindestens einen, ausgewählt aus der Gruppe, bestehend aus Methylpropionat und Ethylpropionat, umfasst.

**3.** Batterie mit nichtwässrigem Elektrolyt gemäß Anspruch 1 oder 2, wobei die positive Elektrode ferner ein Nickel-Cobalt-Mangan-Kompositoxid mit einer Zusammensetzung, dargestellt durch die allgemeine Formel $Li_{1-x}Ni_{1-a-b-c}Co_aMn_bM1_cO_2$, umfasst und
wobei in der allgemeinen Formel M1 mindestens eines, ausgewählt aus der Gruppe, bestehend aus Mg, Al, Si, Ti, Zn, Zr, Ca, W, Nb und Sn, ist, und die jeweiligen Indizes in die Bereiche $-0{,}2 \leq x \leq 0{,}5$, $0 < a < 0{,}4$, $0 < b < 0{,}5$ und $0 \leq c < 0{,}1$ fallen.

**4.** Batterie mit nichtwässrigem Elektrolyt gemäß Anspruch 3, wobei der Index a in einen Bereich von $0{,}25 < a < 0{,}4$ fällt.

**5.** Batterie mit nichtwässrigem Elektrolyt gemäß Anspruch 1 oder 2, wobei die positive Elektrode ein Positivelektrodenaktivmaterial umfasst, und das Positivelektrodenaktivmaterial das Lithium-Cobalt-Kompositoxid umfasst, und ein Gewicht des Lithium-Cobalt-Kompositoxids 5 Gew.-% bis 100 Gew.-%, bezogen auf ein Gewicht des Positivelektrodenaktivmaterials, beträgt.

**6.** Batterie mit nichtwässrigem Elektrolyt gemäß Anspruch 5, wobei das Gewicht des Lithium-Cobalt-Kompositoxids 10 Gew.-% bis 100 Gew.-%, bezogen auf das Gewicht des Positivelektrodenaktivmaterials, beträgt.

**7.** Batterie mit nichtwässrigem Elektrolyt gemäß einem der Ansprüche 1 bis 6, wobei der nichtwässrige Elektrolyt Propylencarbonat umfasst.

**8.** Batterie mit nichtwässrigem Elektrolyt gemäß Anspruch 7, wobei ein Gehalt des Propylencarbonats in dem nichtwässrigen Elektrolyt 20 Gew.-% oder mehr und weniger als 60 Gew.-%, bezogen auf das Gewicht des nichtwässrigen Elektrolyts, beträgt.

**9.** Batterie mit nichtwässrigem Elektrolyt gemäß Anspruch 8, wobei der Gehalt des Propylencarbonats in dem nichtwässrigen Elektrolyt 20 Gew.-% oder mehr und weniger als 40 Gew.-%, bezogen auf das Gewicht des nichtwässrigen Elektrolyts, beträgt.

**10.** Batterie mit nichtwässrigem Elektrolyt gemäß einem der Ansprüche 1 bis 9, wobei das Lithium-Cobalt-Kompositoxid Lithium-Cobaltat mit einer Zusammensetzung, dargestellt durch die allgemeine Formel $Li_{x1}CoO_2$, worin $0 < x1 \leq 1$, umfasst.

**11.** Batterie mit nichtwässrigem Elektrolyt gemäß einem der Ansprüche 1 bis 10, wobei das Lithium-Titan-Kompositoxid Lithiumtitanat mit einer Kristallstruktur vom Spinell-Typ und der allgemeinen Formel $Li_{4+y}Ti_5O_{12}$, worin $0 \leq y \leq 3$, umfasst.

**12.** Batterie mit nichtwässrigem Elektrolyt gemäß einem der Ansprüche 1 bis 11, wobei die positive Elektrode und die negative Elektrode $1,3 \leq p/n < 1,5$ erfüllen.

**13.** Batterie mit nichtwässrigem Elektrolyt gemäß einem der Ansprüche 1 bis 12, wobei die positive Elektrode und die negative Elektrode $1,3 \leq p/n < 1,45$ erfüllen.

**14.** Batteriepack, umfassend die Batterie mit nichtwässrigem Elektrolyt gemäß einem der Ansprüche 1 bis 13.

**15.** Batteriesystem, umfassend:

eine erste Batterieeinheit, umfassend die Batterie mit nichtwässrigem Elektrolyt gemäß einem der Ansprüche 1 bis 13; und
eine zweite Batterieeinheit, die elektrisch parallel zur ersten Batterieeinheit geschaltet ist und einen Blei-Säure-Akkumulator umfasst.

**Revendications**

**1.** Batterie à électrolyte non aqueux comprenant :

une électrode positive comprenant un oxyde de composite lithium-cobalt ;
une électrode négative comprenant un oxyde de composite lithium-titane ; et
un électrolyte non aqueux,
dans laquelle l'électrode positive et l'électrode négative satisfont une formule (1) : $1,25 \leq p/n \leq 1,6$, où p est une capacité $[mAh/cm^2]$ de l'électrode positive, et n est une capacité $[mAh/cm^2]$ de l'électrode négative, p et n étant mesurés par le procédé défini dans la description,
l'électrolyte non aqueux comprend au moins un ester propionate, un contenu w de le au moins un ester propionate dans l'électrolyte non aqueux est de 20 % en poids ou plus et de moins de 64 % en poids par rapport à l'électrolyte non aqueux, et
la batterie à électrolyte non aqueux satisfait une formule (2) : $13 < w/(p/n) \leq 40$.

**2.** Batterie à électrolyte non aqueux selon la revendication 1, dans laquelle le au moins un ester propionate au moins un ester propionate sélectionné parmi le groupe consistant en le propionate de méthyle et le propionate d'éthyle.

**3.** Batterie à électrolyte non aqueux selon la revendication 1 ou 2, dans laquelle l'électrode positive comprend en outre un oxyde de composite nickel-cobalt-manganèse ayant une composition représentée par une formule générale de $Li_{1-x}Ni_{1-a-b-c}Co_aMn_bM1_cO_2$, et
dans la formule générale, M1 est au moins un élément sélectionné parmi le groupe consistant en Mg, Al, Si, Ti, Zn, Zr, Ca, W, Nb et Sn, et les indices respectifs tombent dans des plages de $-0,2 \leq x \leq 0,5$, $0 < a < 0,4$, $0 < b < 0,5$, et $0 \leq c < 0,1$.

**4.** Batterie à électrolyte non aqueux selon la revendication 3, dans laquelle l'indice a tombe dans une plage de $0,25 < a < 0,4$.

**5.** Batterie à électrolyte non aqueux selon la revendication 1 ou 2, dans laquelle l'électrode positive comprend un matériau actif d'électrode positive, et le matériau actif d'électrode positive comprend l'oxyde de composite lithium-cobalt, et
un poids de l'oxyde de composite lithium-cobalt est de 5 % en poids à 100 % en poids par rapport à un poids du matériau actif d'électrode positive.

**6.** Batterie à électrolyte non aqueux selon la revendication 5, dans laquelle le poids de l'oxyde de composite lithium-cobalt est de 10 % en poids à 100 % en poids par rapport au poids du matériau actif d'électrode positive.

**7.** Batterie à électrolyte non aqueux selon l'une quelconque des revendications 1 à 6, dans laquelle l'électrolyte non aqueux comprend du carbonate de propylène.

8. Batterie à électrolyte non aqueux selon la revendication 7, dans laquelle un contenu du carbonate de propylène dans l'électrolyte non aqueux est de 20 % en poids ou plus et de moins de 60 % en poids par rapport à un poids de l'électrolyte non aqueux.

9. Batterie à électrolyte non aqueux selon la revendication 8, dans laquelle le contenu du carbonate de propylène dans l'électrolyte non aqueux est de 20 % en poids ou plus et de moins de 40 % en poids par rapport au poids de l'électrolyte non aqueux.

10. Batterie à électrolyte non aqueux selon l'une quelconque des revendications 1 à 9, dans laquelle l'oxyde de composite lithium-cobalt comprend du cobaltate de lithium ayant une composition représentée par une formule générale de $Li_{x1}CoO_2$ où $0 < x1 \leq 1$.

11. Batterie à électrolyte non aqueux selon l'une quelconque des revendications 1 à 10, dans laquelle l'oxyde de composite lithium-titane comprend du titanate de lithium ayant une structure cristalline de type spinelle et ayant une formule générale de $Li_{4+y}Ti_5O_{12}$ où $0 \leq y \leq 3$.

12. Batterie à électrolyte non aqueux selon l'une quelconque des revendications 1 à 11, dans laquelle l'électrode positive et l'électrode négative satisfont $1,3 \leq p/n < 1,5$.

13. Batterie à électrolyte non aqueux selon l'une quelconque des revendications 1 à 12, dans laquelle l'électrode positive et l'électrode négative satisfont $1,3 \leq p/n < 1,45$.

14. Bloc-batterie comprenant la batterie à électrolyte non aqueux selon l'une quelconque des revendications 1 à 13.

15. Système de batterie comprenant :

une première unité de batterie comprenant la batterie à électrolyte non aqueux selon l'une quelconque des revendications 1 à 13 ; et
une seconde unité de batterie connectée électriquement en parallèle de la première unité de batterie et comprenant une batterie de stockage au plomb-acide.

F I G. 1

F I G. 2

F I G. 3

F I G. 4

F I G. 5

F I G. 6

F I G. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3754218 B
- JP 2016035901 A
- JP 5433953 B
- JP 2007305447 A
- JP 2005142047 A
- JP 2004087229 A